(19) Europäisches Patentamt
European Patent Office
Office européen des brevets

(11) **EP 4 629 468 A1**

(12) **EUROPÄISCHE PATENTANMELDUNG**

(43) Veröffentlichungstag:
08.10.2025 Patentblatt 2025/41

(21) Anmeldenummer: **24223621.4**

(22) Anmeldetag: **30.12.2024**

(51) Internationale Patentklassifikation (IPC):
**H02J 3/38** (2006.01)   **H02J 3/50** (2006.01)

(52) Gemeinsame Patentklassifikation (CPC):
**H02J 3/381; H02J 3/50;** H02J 2300/28

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **04.04.2024 EP 24168477**

(71) Anmelder: **Wobben Properties GmbH**
**26607 Aurich (DE)**

(72) Erfinder:
• **Malekian Boroujeni, Kaveh**
**28201 Bremen (DE)**
• **Busker, Kai**
**26629 Großefehn (DE)**

(74) Vertreter: **Eisenführ Speiser**
**Patentanwälte Rechtsanwälte PartGmbB**
**Postfach 10 60 78**
**28060 Bremen (DE)**

(54) **VERFAHREN ZUM BEREITSTELLEN EINER BLINDLEISTUNG DURCH EINEN MEHRERE WINDENERGIEANLAGEN AUFWEISENDEN WINDPARK**

(57)    Die Erfindung betrifft ein Verfahren zum Bereitstellen einer Parkblindleistung durch einen mehrere Windenergieanlagen aufweisenden Windpark, umfassend die Schritte Empfangen eines eine Parkblindleistung kennzeichnenden oder beeinflussenden Parkvorgabewertes zur Vorgabe einer durch den Windpark einzuspeisenden Blindleistung, Bestimmen eines Parksteuersollwertes als gemeinsamen Vorgabewert für alle Windenergieanlagen in Abhängigkeit von dem Parkvorgabewert, Bestimmen eines individuellen Anlagensteuersollwertes jeweils für eine der Windenergieanlagen in Abhängigkeit von dem Parksteuersollwert, Bestimmen und Abgeben einer individuellen Anlagenblindleistung oder eines individuellen Blindstroms jeweils durch eine der Windenergieanlagen in Abhängigkeit von einer Anlagenspannungsdifferenz als Differenz zwischen einer Anlagenistspannung und einem individuellen Anlagenspannungssollwert der jeweiligen Windenergieanlage, wobei der individuelle Anlagenspannungssollwert aus dem individuellen Anlagensteuersollwert der jeweiligen Windenergieanlage bestimmt wird, oder dem individuellen Anlagensteuersollwert entspricht, und wobei der individuelle Anlagensteuersollwert jeweils in Abhängigkeit von der individuellen Anlagenblindleistung der jeweiligen Windenergieanlage und in Abhängigkeit von mehreren, insbesondere allen individuellen Anlagenblindleistungen der Windenergieanlagen des Windparks bestimmt wird.

Fig. 9

EP 4 629 468 A1

**Beschreibung**

Die vorliegende Erfindung betrifft ein Verfahren zum Bereitstellen einer Blindleistung durch einen mehrere Windenergieanlagen aufweisenden Windpark. Außerdem betrifft die vorliegende Erfindung einen entsprechenden Windpark.

Windparks sind bekannt, sie speisen elektrische Leistung aus Wind in ein elektrisches Versorgungsnetz ein. Windparks können dabei als Kraftwerke verstanden werden, die auch signifikanten Einfluss auf die Netzstabilität haben können und entsprechend zur Netzstützung eingesetzt werden können. Unter anderem kann ein Netzbetreiber Vorgaben an den Windpark machen, die dieser entsprechend umsetzen soll.

Eine solche Vorgabe kann eine gewünschte Blindleistung sein, die der Park insgesamt einspeisen soll. Eine solche Vorgabe kann dynamisch vorgegeben werden, es geht also weniger um eine einmalige Vorgabe, sondern um eine, die sich ändern kann, nämlich insbesondere je nach aktuellem Bedürfnis des elektrischen Versorgungsnetzes und damit des Netzbetreibers.

Ein solcher gemeinsamer Blindleistungswert des Windparks ist dann auf die einzelnen Windenergieanlagen aufzuteilen. Eine Möglichkeit wäre, diese Blindleistung gleichmäßig auf alle Windenergieanlagen zu verteilen, sodass bspw. bei 10 Windenergieanlagen im Windpark jede Windenergieanlage ein Zehntel der Blindleistung erzeugen muss. Dadurch könnte sich allerdings eine unangemessene Verteilung ergeben, wenn die Windenergieanlagen nicht gleich groß sind oder in dem Moment nicht gleich viel Leistung erzeugen, weil bspw. eine der Windenergieanlagen kleiner als die anderen ist, oder durch eine andere Windenergieanlage oder anderes Hindernis temporär in einem Windschatten ist.

Es kommt auch in Betracht, jeweils prozentuale Werte der Blindleistung an die einzelnen Windenergieanlagen zu übertragen, wobei diese prozentualen Werte sich auf die jeweilige Nennleistung oder erzeugte Leistung der jeweiligen Windenergieanlage beziehen können. Ein solcher Wert kann ausgeregelt werden, indem dann, wenn die vorgegebene Parkblindleistung noch nicht erreicht ist, dieser prozentuale Wert angehoben wird, sodass dann alle Anlagen mehr Blindleistung erzeugen, bis der gemeinsame vorgegebene Parkblindleistungswert erreicht wird. Besonders, wenn sich der prozentuale Wert auf die jeweilige Nennleistung der Windenergieanlage bezieht, wird die aktuelle Leistungsproduktion der Windenergieanlage nicht berücksichtigt. Wird die aktuell eingespeiste Wirkleistung jeder Windenergieanlage berücksichtigt, so ist der Prozess der Aufteilung der prozentualen Werte einer ständigen Schwankung ausgesetzt.

Grundsätzlich kann es auch ungünstig sein, dass die Windenergieanlagen unterschiedliche Blindleistungen abgeben, weil dadurch eine Asymmetrie entstehen kann.

Es ist auch zu beachten, dass bei der Vorgabe einzelner Blindleistungswerte für die einzelnen Windenergieanlagen eine Regelungsdynamik zu beachten ist, die ggf. nicht an die Regelungsdynamik der einzelnen Windenergieanlagen zur Blindleistungsbestimmung und -einstellung angepasst ist.

Eine Möglichkeit der Blindleistungssteuerung kann darin bestehen, in Abhängigkeit von der vorgegebenen Parkblindleistung einen Spannungssollwert des Parks, also einen Parkspannungssollwert vorzugeben, der an die einzelnen Windenergieanlagen gegeben wird. Die einzelnen Windenergieanlagen können dann in Abhängigkeit von einer Differenz zwischen diesem Parkspannungssollwert und der aktuellen Spannung an der betreffenden Windenergieanlage einen Blindstrom vorgeben, der einfach dieser Differenz, multipliziert mit einem Verstärkungsfaktor, entspricht. Durch eine solche Vorgabe kann jede Windenergieanlage zusätzlich auf Schwankungen der Netzspannung durch veränderte Blindleistungseinspeisung reagieren, weil sich die Netzspannung sofort auf die an jeder Windenergieanlage anliegende Spannung auswirkt.

Wird die vorgegebene Gesamtblindleistung des Parks nicht erreicht, kann der Parkspannungssollwert erhöht oder verringert werden.

Durch Vorgabe der Gesamtblindleistung besteht dann das Problem, dass die Blindleistung durch Asymmetrien bzw. besonders durch unterschiedlich lange Anschlussleitungen der jeweiligen Windenergieanlage im Windpark unterschiedliche Ausgangsspannungen an den jeweiligen Windenergieanlagen auftreten können, sodass die Spannungsdifferenz zwischen Windenergieanlagen variiert, was zu entsprechend unterschiedlichen Blindleistungswerten zwischen den Anlagen führt.

Der vorliegenden Erfindung liegt somit die Aufgabe zu Grunde, zumindest eines der vorstehend beschriebenen Probleme zu adressieren. Insbesondere soll eine Lösung geschaffen werden, bei der ein Parkblindleistungssollwert zur Umsetzung so auf die einzelnen Windenergieanlagen des Windparks aufgeteilt wird, dass eine möglichst gleichmäßige bzw. symmetrische Gesamtsituation der Blindleistungsbereitstellung durch die einzelnen Windenergieanlagen erfolgt. Zumindest soll zu bisher bekannten Lösungen eine Alternative vorgeschlagen werden.

Erfindungsgemäß wird ein Verfahren gemäß Anspruch 1 vorgeschlagen. Somit wird ein Verfahren zum Bereitstellen einer Blindleistung durch einen mehrere Windenergieanlagen aufweisenden Windpark vorgeschlagen, die als Parkblindleistung bezeichnet wird. Insoweit wird ein Verfahren zum Steuern eines Windparks vorgeschlagen. Das Verfahren zum Bereitstellen der Blindleistung bzw. zum Steuern des Windparks sieht das Empfangen eines eine Parkblindleistung kennzeichnenden oder beeinflussenden Parkvorgabewertes zur Vorgabe einer durch den Windpark einzuspeisenden Blindleistung vor. Der Parkvorgabewert kann als Parkblindleistungssollwert vorgegeben werden und dabei unmittelbar die einzuspeisende Blindleistung sein, oder bspw. als ein Phasenwinkel φ oder cos(φ) am Netzanschlusspunkt des Windparks vorgegeben werden, der beim Einspeisen einer Parkblindleistung erreicht werden soll. Es kann auch basierend auf einer erfassten Spannung, besonders am Netzanschlusspunkt, und einer vorgegebenen U-Q-Charakteristik bzw. Q(U)-Funktion, die einen Zusammenhang zwischen erfasster Spannung und vorzugebender Blindleistung herstellt, ein Sollwert für die Parkblindleistung vorgegeben bzw. bestimmt werden. Es kann auch eine Sollspannung vorgegeben werden und in Abhängigkeit von dieser Sollspannung, besonders in Abhängigkeit von einer Abweichung einer Ist-Spannung von der Soll-Spannung, ein Sollwert für die Parkblindleistung vorgegeben bzw. bestimmt werden

Ein solcher Parkvorgabewert, insbesondere der Parkblindleistungssollwert, kann durch einen Netzbetreiber vorgegeben werden, insbesondere dynamisch vorgegeben werden. Dazu kann der Windpark eine Parksteuereinrichtung aufweisen, die eine Schnittstelle aufweist, über die ein Netzbetreiber, ein Energieversorgungsunternehmen und/oder eine andere Person oder Institution einen solchen Parkvorgabewert, insbesondere Parkblindleistungssollwert eingeben kann. Dies kann für den Parkblindleistungssollwert durch Eingeben eines absoluten Blindleistungswertes mit der Einheit var erfolgen. Es kann aber auch ein prozentualer Wert eingegeben werden, der sich bspw. auf eine Nennleistung des Windparks bezieht.

Ein Parkvorgabewert kann also als ein Sollwert vom Netzbetreiber vorgegeben werden. Ein solcher Sollwert vom Netzbetreiber kann somit ein Phasenwinkel φ oder cos(φ), oder unmittelbar ein Wert für eine Blindleistung sein. Darüber hinaus ist es möglich, dass der Parkblindleistungssollwert aus einer vom Netzbetreiber vorgegebenen Q(U)-Funktion ermittelt wird. Eine solche Q(U)-Funktion bzw. der jeweils davon abhängig bestimmte Wert kann den Parkvorgabewert bilden. Aus solchen externen Sollwerten kann schließlich der Parkblindleistungssollwert ermittelt werden.

In Abhängigkeit von diesem Parkvorgabewert bzw. Parkblindleistungssollwert wird ein Parksteuersollwert als gemeinsamer Vorgabewert für alle Windenergieanlagen in Abhängigkeit von dem Parkvorgabewert bestimmt. Der Parksteuersollwert kann ein Spannungssollwert oder ein Blindleistungssollwert sein. Besonders wenn er als Blindleistungssollwert bestimmt wird, kann er auch als relativer Wert, insbesondere prozentualer Wert vorgegeben werden. Als Bezugsgröße kann eine Nennleistung, insbesondere Nennwirkleistung oder Nennblindleistung des Windparks, gewählt werden. Ein Blindleistungssollwert von 50% würde somit bedeuten, dass Blindleistung in Höhe einer halben Nennblindleistung des Windparks eingespeist werden soll.

Bei Vorgabe als Parkblindleistungssollwert kann davon abhängig ein Parkspannungssollwert als gemeinsamer Spannungssollwert für alle Windenergieanlagen bestimmt werden. Der gemeinsame Spannungssollwert bildet dann den gemeinsamen Vorgabewert. Ein solcher Parkspannungssollwert könnte dann - wenn er nicht wie unten noch erläutert modifiziert wird - an jeder Windenergieanlage anliegen, die daraufhin jeweils eigenständig eine Differenz zwischen einem solchen Parkspannungssollwert und der aktuellen Spannung an der Windenergieanlage auszuregeln versucht. Die Spannung an der jeweiligen Windenergieanlage ist besonders eine Spannung an den Anschlussklemmen der jeweiligen Windenergieanlage.

Wenn der gemeinsame Vorgabewert nicht als Spannungssollwert ausgebildet ist, kann aber aus ihm jeweils ein Spannungssollwert bestimmt werden, wie unten noch ausgeführt wird. Es kann dann auch eine Differenz zwischen einem Parkspannungssollwert und der aktuellen Spannung an der Windenergieanlage auszuregeln versucht werden.

Das Ausregeln einer solchen Spannungsdifferenz kann dadurch erfolgen, dass die jeweilige Windenergieanlage einen P-Regler verwendet. Die Differenz zwischen dem Parkspannungssollwert und der Spannung an den Anschlussklemmen der jeweiligen Windenergieanlage wird also mit einem Proportionalitätsfaktor multipliziert und das Ergebnis ist insbesondere ein Blindstrom, den die betreffende Windenergieanlage erzeugt und abgibt. Entsprechend kann dadurch die an der Windenergieanlage anliegende Spannung erhöht oder verringert werden, wobei aufgrund der Verwendung eines solchen P-Reglers allerdings eine Regelabweichung verbleiben kann. Eine solche Regelabweichung ist dabei auch erwünscht, denn es geht nicht um das absolute Ausregeln dieser Spannungsdifferenz, sondern darum, über eine solche Spannungsdifferenz eine für jede Windenergieanlage individuelle Blindleistungserzeugung bzw. Blindstromerzeugung zu erreichen.

Es wird nun aber vorgeschlagen, dass ein individueller Anlagensteuersollwert, insbesondere Anlagenspannungssollwert jeweils für eine der Windenergieanlagen in Abhängigkeit von dem Parksteuersollwert bestimmt wird. Es wird besonders der Parksteuersollwert für alle Windenergieanlagen individuell verändert, wodurch jeweils der individuelle Anlagensteuersollwert für jede Windenergieanlage bestimmt wird.

Wird der Anlagenspannungssollwert bestimmt, so erfolgt das in Abhängigkeit von einem gemeinsamen Spannungssollwert, nämlich dem Parkspannungssollwert. Insbesondere erhält so jede Windenergieanlage einen individuellen Anlagenspannungssollwert, der auf dem gemeinsamen Spannungssollwert basiert. Mit anderen Worten wird der gemeinsame Spannungssollwert, also der Parkspannungssollwert, für jede Windenergieanlage individuell modifiziert.

Es erfolgt dann ein Bestimmen und Abgeben einer individuellen Anlagenblindleistung oder eines individuellen Blindstroms jeweils durch eine der Windenergieanlagen in Abhängigkeit von einer Anlagenspannungsdifferenz als Differenz zwischen einer Anlagenist-

spannung und dem individuellen Anlagenspannungs-sollwert der jeweiligen Windenergieanlage. Somit kann über das Bestimmen des individuellen Anlagenspannungssollwertes die Höhe der Blindleistung bzw. des Blindstroms jeder Windenergieanlage für jede Windenergieanlage individuell beeinflusst werden.

Dazu ist vorgesehen, dass der individuelle Anlagensteuersollwert jeweils in Abhängigkeit von der individuellen Anlagenblindleistung der jeweiligen Windenergieanlage und in Abhängigkeit von mehreren, insbesondere in Abhängigkeit von allen individuellen Anlagenblindleistungen der Windenergieanlage des Windparks bestimmt wird. Somit hängt auch der individuelle Anlagenspannungssollwert, der dem Anlagensteuersollwert entsprechen kann, oder aus ihm bestimmt wird, von der individuellen Anlagenblindleistung und den Blindleistungen insbesondere der übrigen Windenergieanlagen ab. Insbesondere wird hier ein Bezug hergestellt zwischen der individuellen Anlagenblindleistung und den übrigen Anlagenblindleistungen. Besonders kann der Bezug zwischen jeweils einer individuellen Anlagenblindleistung und einem Mittelwert oder einem Durchschnitt aller oder zumindest der übrigen Anlagenblindleistungen hergestellt werden.

Somit wird ein Bezug zwischen der individuellen Anlagenblindleistung und der Gesamtsituation des Windparks hinsichtlich Blindleistung hergestellt, also insbesondere der Bezug zum Durchschnitt aller Anlagenblindleistungen. Dieser Bezug beeinflusst somit den individuellen Anlagenspannungssollwert und der beeinflusst die Erzeugung der Anlagenblindleistung der betreffenden Anlage. Dadurch kann die Anlagenblindleistung angepasst werden, insbesondere an den Durchschnitt aller bzw. der übrigen Anlagenblindleistungen des Windparks. Dadurch wiederum ist es möglich, eine Symmetrierung der erzeugten Anlagenblindleistungen zu erreichen.

Besonders vorteilhaft an diesem Verfahren ist, dass ein Blindleistungsregler in jeder Windenergieanlage verwendet werden kann, der für die gewünschte Symmetrierung nicht angepasst zu werden braucht. Die Symmetrierung ist dadurch erreichbar, dass jeder Blindleistungsregler der Windenergieanlage lediglich einen angepassten Spannungssollwert, nämlich den individuellen Anlagenspannungssollwert erhält. Dieser hängt dabei außerdem von dem gemeinsamen Vorgabewert, insbesondere Spannungssollwert, also dem Parkspannungssollwert ab. Wird der vorgegebene Parkvorgabewert, insbesondere Parkblindleistungssollwert verändert, verändert sich dadurch der Vorgabewert, insbesondere der gemeinsame Spannungssollwert, also der Parkspannungssollwert, was sofort Einfluss auf jeden individuellen Anlagenspannungssollwert hat.

Erhöht sich also bspw. der Parkblindleistungssollwert, kann sich entsprechend der Parkspannungssollwert erhöhen und damit kann sich auch sofort die individuelle Anlagenblindleistung jeder Windenergieanlage erhöhen. Besonders bei Verwendung eines Blindleistungsreglers in jeder Windenergieanlage mit P-Regelverhalten, kann diese Blindleistungs- bzw. Blindstromerhöhung auch sofort erfolgen.

Dabei ist die durch das Bestimmen der individuellen Anlagenspannungssollwerte erreichte Symmetrierung zunächst unverändert. Sie kann ggf. noch an die geänderte Situation, also an den geänderten Parkvorgabewert, insbesondere Parkblindleistungssollwert angepasst werden, was aber nicht so zeitkritisch ist, denn die Erhöhung der individuellen Anlagenblindleistungen und damit auch die Erhöhung der Parkblindleistung ist im Wesentlichen bereits erfolgt. Sie kann sogar schon vollständig erfolgt sein, denn das Symmetrieren durch Verändern der individuellen Anlagenspannungssollwerte verändert im Idealfall nur die interne Aufteilung der erzeugten Blindleistung im Windpark und nicht die insgesamt durch den Park bereitgestellte Blindleistung, die auch als Parkblindleistung bezeichnet werden kann.

Gemäß einem Aspekt wird vorgeschlagen, dass der Parkvorgabewert als Parkblindleistungssollwert vorgegeben wird, und/oder der Parksteuersollwert als Parkspannungssollwert zum Vorgeben einer Spannung als gemeinsamen Vorgabewert für alle Windenergieanlagen bestimmt wird, und die individuellen Anlagensteuersollwerte als individuelle Anlagenspannungssollwerte bestimmt werden.

Gemäß diesem Aspekt sieht das Verfahren somit zum Bereitstellen der Blindleistung bzw. zum Steuern des Windparks das Empfangen eines Parkblindleistungssollwertes als Vorgabe einer durch den Windpark einzuspeisenden Blindleistung vor.

In Abhängigkeit von diesem Parkblindleistungssollwert wird ein Parkspannungssollwert als gemeinsamer Spannungssollwert für alle Windenergieanlagen bestimmt. Ein solcher Parkspannungssollwert könnte dann an jeder Windenergieanlage anliegen, die daraufhin jeweils eigenständig eine Differenz zwischen einem solchen Parkspannungssollwert und der aktuellen Spannung an der Windenergieanlage auszuregeln versucht.

Es wird nun aber vorgeschlagen, dass ein individueller Anlagenspannungssollwert jeweils für eine der Windenergieanlagen in Abhängigkeit von dem gemeinsamen Spannungssollwert, also dem Parkspannungssollwert, bestimmt wird. Insbesondere erhält so jede Windenergieanlage einen individuellen Anlagenspannungssollwert, der auf dem gemeinsamen Spannungssollwert basiert. Mit anderen Worten wird der gemeinsame Spannungssollwert, also der Parkspannungssollwert, für jede Windenergieanlage individuell modifiziert.

Es erfolgt dann ein Bestimmen und Abgeben einer individuellen Anlagenblindleistung oder eines individuellen Blindstroms jeweils durch eine der Windenergieanlagen in Abhängigkeit von einer Anlagenspannungsdifferenz als Differenz zwischen einer Anlagenistspannung und dem individuellen Anlagenspannungssollwert der jeweiligen Windenergieanlage. Somit kann über das Bestimmen des individuellen Anlagenspannungssollwertes die Höhe der Blindleistung bzw. des Blindstroms jeder Windenergieanlage für jede Windenergieanlage individuell beeinflusst werden.

Dazu ist vorgesehen, dass der individuelle Anlagenspannungssollwert jeweils in Abhängigkeit von der individuellen Anlagenblindleistung der jeweiligen Windenergieanlage und in Abhängigkeit von mehreren, insbesondere in Abhängigkeit von allen individuellen Anlagenblindleistungen der Windenergieanlage des Windparks bestimmt wird. Somit hängt der individuelle Anlagenspannungssollwert von der individuellen Anlagenblindleistung und den Blindleistungen insbesondere der übrigen Windenergieanlagen ab. Insbesondere wird hier ein Bezug hergestellt zwischen der individuellen Anlagenblindleistung und den übrigen Anlagenblindleistungen.

Gemäß einem Aspekt wird vorgeschlagen, dass der Parkvorgabewert als Parkblindleistungssollwert empfangen wird, oder ein Parkblindleistungssollwert aus dem Parkvorgabewert bestimmt wird, wenn der Parkvorgabewert kein Parkblindleistungssollwert ist, aus dem Parkblindleistungssollwert über einen Regler ein modifizierter Parkblindleistungssollwert bestimmt wird, insbesondere über einen PI-Regler, oder Regler mit PI-Anteil, und das Bestimmen des Parksteuersollwertes in Abhängigkeit von dem Parkvorgabewert dadurch erfolgt, dass der Parksteuersollwert in Abhängigkeit von dem modifizierten Parkblindleistungssollwert bestimmt wird.

Hier wird somit vorgeschlagen, den Parkblindleistungssollwert über einen Regler zu modifizieren. Das wird vorzugsweise in jedem Fall vorgeschlagen, also unabhängig davon, ob der Parkblindleistungssollwert direkt empfangen oder aus anderen Vorgabewerten erst bestimmt wird. Es wird vorzugsweise auch unabhängig davon vorgeschlagen, ob der Parksteuersollwert als Parkspannungssollwert oder als Parkblindleistungssteuersollwert bestimmt wird.

Der Regler bestimmt den modifizierten Parkblindleistungssollwert, gibt ihn also als Ergebnis der Regelung aus. Dadurch kann ein Regelfehler zwischen Parkblindleistungssollwert und Parkblindleistungsistwert ausgeregelt werden.

Hier ist der Gedanke, dass der Windpark selbst Blindleistung verbraucht, sodass von der im Park erzeugten Blindleistung weniger am Netzverknüpfungspunkt bereitgestellt werden kann. Die erfasste Parkblindleistung erreicht dann nicht die vorgegebene Parkblindleistung, es kommt zum Regelfehler. Der Regelfehler führt im PI-Regler dazu, dass der modifizierte Parkblindleistungssollwert ansteigt, bis er um eine solche Differenz über dem nicht modifizierten Parkblindleistungssollwert liegt, die der im Park verbrauchten Blindleistung entspricht.

Der PI-Regler kann in Abhängigkeit von einer Nennleistung und/oder maximalen Blindleistung begrenzt sein. Insbesondere kann er auf eine maximale Blindleistung des Windparks begrenzt sein. Die Begrenzung kann so ausgebildet sein, dass sein I-Anteil begrenzt ist, oder sie kann das beinhalten. Dadurch wird vermieden, dass der I-Anteil unbegrenzt weiter aufintegriert, wenn der Blindleistungssollwert nicht erreicht wird.

Gemäß einem Aspekt wird vorgeschlagen, dass der Parksteuersollwert als Parkblindleistungssteuersollwert zum Vorgeben einer Blindleistung als gemeinsamen Vorgabewert für alle Windenergieanlagen bestimmt wird, und die individuellen Anlagensteuersollwerte als Anlagenblindleistungssollwerte bestimmt werden.

Dies ist besonders zum Aspekt, einen Parksteuersollwert als Parkspannungssollwert zu bestimmen, eine alternative Umsetzung des vorgeschlagenen Verfahrens. Hier wird der Parkvorgabewert in einen Parkblindleistungssteuersollwert umgesetzt, der eine gemeinsame Blindleistung vorgibt, statt einer Spannung. Die Blindleistung als gemeinsamer Vorgabewert wird dann in individuelle Anlagenblindleistungswerte aufgeteilt. Das erfolgt besonders noch auf Parkebene.

Die individuellen Anlagenspannungssollwerte werden also aus individuellen Anlagenblindleistungswerten bestimmt. Die Umsetzung von Blindleistungssollwerten in Spannungssollwerte erfolgt also gegenüber dem vorigen Aspekt später. Die Windenergieanlagen erhalten besonders diese individuellen Anlagenblindleistungswerte und erst die Windenergieanlagen bestimmen dann daraus die individuellen Anlagenspannungssollwerte.

Die individuellen Anlagenspannungssollwerte werden also gemäß diesem Aspekt erst später, besonders erst in der jeweiligen Windenergieanlage bestimmt, wohingegen sie gemäß dem Aspekt, einen Parksteuersollwert als Parkspannungssollwert zu bestimmen, von den Windenergieanlagen als Eingabewerte empfangen wurden.

Die Anlagenblindleistungen werden dann basierend auf den Anlagenspannungssollwerten bestimmt und das ist in beiden Aspekten gleich. Das Bestimmen der Anlagenblindleistungen basierend auf den Anlagenspannungssollwerten ist also unabhängig davon, ob die Anlagenspannungssollwerte gemäß diesem Aspekt erst aus den Anlagenblindleistungssollwerten bestimmt wurden, besonders erst in der Windenergieanlage, oder gemäß vorigem Aspekt die Anlagenspannungssollwerte außerhalb der Windenergieanlage bestimmt und an die Windenergieanlage übertragen wurden und insbesondere die Übertragung von Blindleistungssollwerten in Spannungssollwerte schon früher erfolgt ist.

Bei beiden Aspekten können die individuellen Anlagenspannungssollwerte jeweils in Abhängigkeit von der individuellen Anlagenblindleistung der jeweiligen Windenergieanlage und in Abhängigkeit von mehreren, insbesondere allen individuellen Anlagenblindleistungen der Windenergieanlagen des Windparks bestimmt werden, sei es direkt oder indirekt.

Gemäß einem Aspekt wird vorgeschlagen, dass an jeder der Windenergieanlagen, aus dem jeweiligen Anlagensteuersollwert, insbesondere, wenn er als Anlagenblindleistungssollwert bestimmt wird, der jeweilige Anlagenspannungssollwert bestimmt wird, insbesondere mittels einer Steuerwertübertragungseinheit.

Somit erfolgt das Bestimmen der Anlagenspannungssollwerte jeweils an der Windenergieanlage, besonders mittels einer Anlagensteuerung der betreffenden Windenergieanlage. Die Steuerwertübertragungseinheit kann Teil der Anlagensteuerung sein, insbesondere dort als Funktionsblock implementiert sein.

Gemäß einem Aspekt wird vorgeschlagen, dass aus jedem Anlagensteuersollwert, insbesondere, wenn er als Anlagenblindleistungssollwert bestimmt wird, jeweils über eine Steuerwertübertragungsfunktion der Anlagenspannungssollwert bestimmt wird, und die Steuerwertübertragungsfunktion wenigstens eine der folgenden Eigenschaften aufweist.

Eine mögliche, vorgeschlagene Eigenschaft der Steuerwertübertragungsfunktion ist, dass die Steuerwertübertragungsfunktion ein Tiefpassverhalten aufweist, mit wenigstens einer ersten Haupttiefpasszeitkonstanten, wobei insbesondere die erste Haupttiefpasszeitkonstante einen Wert im Bereich von 100ms bis 500ms aufweist. Es wird also vorgeschlagen, dass der Anlagenblindleistungssollwert mit einem Tiefpassverhalten in den Anlagenspannungssollwert übertragen wird. Ein Tiefpassverhalten erster Ordnung, also ein PT1-Verhalten kann ausreichen. Seine Zeitkonstante ist dann die Hauptzeitkonstante. Bei Tiefpassfiltern höherer Ordnung kann die größte Zeitkonstante als Hauptzeitkonstante betrachtet werden.

Hier wurde berücksichtigt, dass der Sollwert somit gefiltert werden kann, was aber keinen Einfluss auf die Schnelligkeit der Umsetzung des Sollwertes in die Blindleistung bzw. den Blindstrom hat.

Eine mögliche, vorgeschlagene Eigenschaft der Steuerwertübertragungsfunktion ist, dass die Steuerwertübertragungsfunktion das Bestimmen des Anlagenspannungssollwertes unabhängig von einer Anlagenistspannung ausführt. Hierdurch kann eine gute Entkopplung zwischen Vorgabe und Umgebungsbedingungen erreicht werden. Besonders ist die Übertragung dadurch als reine Steuerung realisierbar. Dazu ist zu beachten, dass im Windpark sehr viele Windenergieanlagen stehen können und entsprechend viele Steuerwertübertragungsfunktionen parallel arbeiten, die dadurch auch von einander entkoppelt sind

Eine mögliche, vorgeschlagene Eigenschaft der Steuerwertübertragungsfunktion ist, dass die Steuerwertübertragungsfunktion einen Gradienten des Anlagenspannungssollwertes auf einen vorgegebenen Gradientengrenzwert begrenzt. Dadurch können zu starke Blindleistungsänderungen vermieden werden, ohne dafür in die Reglung der Umsetzung einzugreifen. Die vorgeschlagene Begrenzung ist daher positiv für die Stabilität.

Eine mögliche, vorgeschlagene Eigenschaft der Steuerwertübertragungsfunktion ist, dass die Steuerwertübertragungsfunktion eine Amplitude des Anlagenspannungssollwertes auf einen vorgegebenen Amplitudengrenzwert begrenzt. Hierdurch wird vermieden, dass besonders ein zu hoch bestimmter Anlagenblindleistungssollwert nicht in einen zu hohen Spannungssollwert umgesetzt wird, den der entsprechende Regler in der Windenergieanlage nicht umsetzen kann. Es wird dadurch vermieden, dass ein zu hoher Blindstrom gefordert wird, der den einzuspeisenden Wirkstrom unerwünscht beschränken könnte. Die Beschränkung über die Steuerwertübertragungsfunktion ist besonders gut für die Stabilität, da sie nicht auf die Umsetzung im Regler eingreift.

Gemäß einem Aspekt wird vorgeschlagen, dass für jeweils eine der Windenergieanlagen ihr Anlagensteuerwert begrenzt wird. Dafür kann ein vorbestimmter Blindleistungsmaximalwert bzw. für negative Blindleistungen ein vorbestimmter Blindleistungsminimalwert vorgegeben werden. Als Vorgabe können feste Werte vorgegeben werden, oder Werte in Abhängigkeit von einem Arbeitspunkt der betreffenden Windenergieanlage, insbesondere in Abhängigkeit von einer in dem Arbeitspunkt eingespeisten Wirkleistung. Dafür kann ein P-Q-Diagramm zu Grunde gelegt werden, das Blindleistungsgrenzen, insbesondere als Graphen, in Abhängigkeit von der abgegebenen Wirkleistung der Windenergieanlage aufweist. Die Blindleistungsgrenzen geben den jeweiligen Blindleistungsmaximalwert bzw. Blindleistungsminimalwert in Abhängigkeit von der aktuell eingespeisten Wirkleistung an. In Abhängigkeit von der Wirkleistung des aktuellen Arbeitspunktes kann somit ein aktueller Blindleistungsmaximalwert und/oder Blindleistungsminimalwert aus dem P-Q-Diagramm abgelesen und zur Begrenzung verwendet werden.

Besonders wird vorgeschlagen, dass ein Anstieg ihres Anlagensteuersollwertes verhindert wird, wenn ihre abgegebene individuelle Anlagenblindleistung bzw. ihr abgegebener individueller Blindstrom einen vorbestimmten Maximalwert erreicht hat, der insbesondere einen Wert angibt, den die individuelle Anlagenblindleistung bzw. der individuelle Blindstrom nicht überschreiten kann oder darf. Somit erfolgt eine Begrenzung, die aber von der abgegebenen Blindleistung bzw. dem abgegebenen Blindstrom abhängt. Hier wurde erkannt, dass eine Begrenzung des Sollwertes erst erforderlich ist, wenn seine Umsetzung nicht mehr möglich bzw. nicht mehr vorteilhaft ist. Dadurch kann die Blindleistungsabgabe begrenzt werden, ohne die Begrenzung in der entsprechenden umsetzenden Regelung zu implementieren.

Dazu ist insbesondere vorgesehen, dass die jeweils abgegebene individuelle Anlagenblindleistung bzw. der abgegebene individuelle Blindstrom erfasst wird und darauf überprüft wird, ob der vorbestimmte Maximalwert erreicht wird und, wenn der vorbestimmte Maximalwert erreicht wird, der Anstieg des Anlagensteuersollwertes verhindert wird, insbesondere der Anlagensteuerwert und/oder ein den Anlagensteuerwert beeinflussender Offset eingefroren wird, bis der vorbestimmte Maximalwert wieder unterschritten wird. Dadurch kann die Blindleistung bzw. der Blindstrom bis an den Maximalwert herangeführt werden, ohne aber in der Regelung eine Begrenzung zu implementieren.

Gemäß einem Aspekt wird vorgeschlagen, dass der individuelle Anlagensteuersollwert, insbesondere der Anlagenspannungssollwert aus dem Parksteuersollwert, insbesondere dem Parkspannungssollwert und einem individuellen Steuerkorrekturwert, insbesondere Spannungskorrekturwert bestimmt wird. Insbesondere wird dazu der Steuerkorrekturwert bzw. Spannungskorrekturwert von dem Parksteuersollwert bzw. Parkspannungssollwert abgezogen. Dazu wird ferner vorgeschlagen, dass der individuelle Steuerkorrekturwert, insbesondere Spannungskorrekturwert in Abhängigkeit von einer Mittelwertdifferenz, insbesondere aus einer Mittelwertdifferenz bestimmt wird, wobei die Mittelwertdifferenz eine Differenz zwischen der jeweiligen individuellen Anlagenblindleistung und einem Mittelwert aller individuellen Anlagenblindleistungen bezeichnet.

Es wird also ein Mittelwert aus individuellen Anlagenleistungen bestimmt. Insbesondere werden alle individuellen Anlagenblindleistungen aufsummiert und durch die Anzahl der Windenergieanlagen geteilt. Der Steuerkorrekturwert, insbesondere Spannungskorrekturwert ist also dem Betrage nach umso größer, je stärker die Anlagenblindleistung der jeweils betrachteten Windenergieanlage von der durchschnittlichen Anlagenblindleistung aller Windenergieanlagen im Windpark abweicht. Entsprechend wird auch für die jeweilige Windenergieanlage der Parksteuersollwert bzw. Parkspannungssollwert umso stärker modifiziert, umso größer der individuelle Steuerkorrekturwert bzw. Spannungskorrekturwert ist. Das Prinzip trifft genauso zu, wenn Anlagensteuersollwerte als Anlagenblindleistungssollwerte implementiert sind, und Parksteuersollwerte als Parkblindleistungssteuersollwerte. Hier erfolgt also die Umsetzung der Blindleistungssollwerte in Spannungssollwerte später, sodass die Modifikation über den Steuerkorrekturwert auf Blindleistungsebene erfolgt. Dafür ist der individuelle Steuerkorrekturwert vorzugsweise als individueller Blindleistungskorrekturwert ausgebildet. Weitere Erläuterungen basierend auf Modifizierungen der Spannungssollwerte sind sinngemäß auf anderen Implementierungen, besonders die andere beschriebene Implementierung über die Blindleistungssollwerte entsprechend anzuwenden.

Beschriebene Anwendungen für Anlagenspannungssollwerte, Parkspannungssollwerte und/oder Spannungskorrekturwerte sind auch repräsentativ für andere Anwendungen auf Anlagensteuersollwerte, Parksteuersollwerte bzw. Steuerkorrekturwerte zu verstehen, insbesondere als Beispiele für Anlagenblindleistungssollwerte, Parkblindleistungssollwerte und/oder Blindleistungskorrekturwerte.

Insbesondere wird vorgeschlagen, dass die Mittelwertdifferenz zur Bestimmung des individuellen Steuerkorrekturwertes bzw. Spannungskorrekturwertes über einen Regler, insbesondere PI-Regler gegeben wird. Der Steuerkorrekturwertes bzw. Spannungskorrekturwert ist also - was sich schon aufgrund der unterschiedlichen Einheiten ergibt - nicht unmittelbar die Differenz zwischen Anlagenblindleistung und Mittelwert aller Anlagenblindleistungen, sondern diese Differenz wird über einen Regler geführt. Wenn der Regler ein PI-Regler ist, wird die Differenz also zum einen mit einer Reglerverstärkung multipliziert und parallel dazu über einen Integrator integriert. Dadurch kann eine stationäre Genauigkeit für die jeweilige Abweichung der individuellen Anlagenblindleistung von dem Durchschnitt der übrigen Anlagenblindleistungen erreicht werden, die Abweichung kann also vollständig ausgeregelt werden.

Außerdem kann über einen solchen PI-Regler eine Reglerdynamik vorgegeben bzw. beeinflusst werden. Besonders kann vorgesehen sein, die Reglerdynamik eines solchen Reglers an eine Reglerdynamik eines Parkreglers anzupassen, der den Parkspannungssollwert in Abhängigkeit von dem Parkblindleistungssollwert vorgibt.

Es ist zu beachten, dass im beispielhaften Fall des PI-Reglers eine stationäre Genauigkeit für die jeweiligen individuellen Anlagenblindleistungswerte erzielbar ist. Es kann also erreicht werden, dass alle individuellen Anlagenblindleistungswerte identisch sind. Es ist zu beachten, dass der genannte PI-Regler nicht dazu führt, dass eine Spannungsdifferenz zwischen jeweils dem individuellen Anlagenspannungssollwert und der an der betreffenden Windenergieanlage erfassten Spannung erreicht wird. Dort ist weiterhin mit einer bleibenden Regelabweichung zu rechnen, jedenfalls dann, wenn in jeder einzelnen Windenergieanlage ein Blindleistungsregler als P-Regler ausgelegt ist.

Ebenfalls ist zu beachten, dass vorzugsweise jede Windenergieanlage durch ihren Blindleistungsregler einen Blindleistungsstrom vorgibt, zur Bestimmung des individuellen Steuerkorrekturwertes bzw. Spannungskorrekturwertes aber die individuelle Anlagenblindleistung betrachtet wird. Dadurch kann jeweils durch den Blindleistungsregler jeder Windenergieanlage ein Blindstrom über die Phasenlage des abgegebenen Stroms vorgegeben werden, während aber für die Symmetrierung die tatsächlich abgegebene Blindleistung betrachtet wird. Besonders bei unterschiedlichen Anlagenspannungen, also den jeweils an den Anschlussklemmen der Windenergieanlage anliegenden Spannungen, können hier Unterschiede zwischen der Betrachtung von Blindstrom und Blindleistung auftreten.

Gemäß einem Aspekt wird vorgeschlagen, dass der individuelle Steuerkorrekturwert, insbesondere Spannungskorrekturwert in Abhängigkeit von einem für die jeweilige Windenergieanlage individuellen Anlagenoffset bestimmt wird. Hier ist besonders vorgesehen, dass der individuelle Steuerkorrekturwert, bzw. Spannungskorrekturwert nicht allein in Abhängigkeit von der Abweichung der Blindleistung der jeweiligen Windenergieanlage von einem Mittelwert bestimmt wird, sondern dass durch diesen individuellen Anlagenoffset die Möglichkeit eines weiteren Eingriffs besteht. Es wird durch diesen Anlagenoffset somit ein weiterer Freiheitsgrad geschaffen. Er kann besonders auf die Abweichung aufaddiert werden.

Es wird daher insbesondere vorgeschlagen, dass die beschriebene Mittelwertdifferenz berücksichtigt wird, die als Differenz zwischen der jeweiligen individuellen Anlagenblindleistung und einem Mittelwert aller individuellen Anlagenblindleistungen bestimmt wird. Diese Mittelwertdifferenz wird somit weiterhin zu Grunde gelegt, und sie kann durch den jeweiligen Anlagenoffset verändert werden.

Besonders ist vorgesehen, dass der individuelle Steuerkorrekturwert, bzw. Spannungskorrekturwert in Abhängigkeit von der Mittelwertdifferenz und dem individuellen Offset bestimmt wird, insbesondere so, dass der individuelle Anlagenoffset jeweils auf die Mittelwertdifferenz aufaddiert wird, um eine modifizierte Mittelwertdifferenz zu bestimmen und insbesondere die modifizierte Mittelwertdifferenz zur Bestimmung des individuellen Steuerkorrekturwertes, bzw. Spannungskorrekturwertes über einen bzw. den Regler, insbesondere PI-Regler gegeben wird.

Hierdurch kann die bisherige Struktur zur Bestimmung der Steuerkorrekturwerte, bzw. Spannungskorrekturwerte beibehalten werden. In dieser beschriebenen Struktur, die teilweise auch nachfolgend noch beschrieben wird, braucht nur der jeweilige individuelle Anlagenoffset auf die jeweilige Mittelwertdifferenz aufgeschaltet zu werden.

Gemäß einem Aspekt wird vorgeschlagen, dass die Summe aller Anlagenoffsets null ist. Dadurch wird erreicht, dass trotz Vorgabe der individuellen Anlagenoffsets, die synonym auch vereinfachend als Anlagenoffsets bezeichnet werden können, eine Symmetrie erhalten bleibt, bzw. dass die Summe aller eingespeister Anlagenblindleistungen den Parkvorgabewert, insbesondere Parkblindleistungssollwert erreicht.

Außerdem oder alternativ wird vorgeschlagen, dass die Anlagenoffsets so bestimmt werden, dass Anlagenblindleistungen an den Windenergieanlagen mit unterschiedlichen Vorzeichen vermieden werden. Die Anlagenoffsets werden insbesondere so bestimmt, dass ein Vergleichsmaß einen Vergleichsgrenzwertwert nicht unterschreitet. Dieser liegt insbesondere zwischen 0,5 und 0,95, oder ist 1, wobei das Vergleichsmaß durch ein Verhältnis des Betrags einer Summe aller eingespeister Anlagenblindleistungen zu einer Summe der Beträge aller Anlagenblindleistungen definiert ist.

Werden Blindleistungen mit unterschiedlichen Vorzeichen erzeugt, also kapazitive und induktive, so führt das zu einer betragsmäßig geringeren Summe im Vergleich zur Summe der Beträge. Das Verhältnis, also der Quotient beider Summen, fällt dadurch unter 1 und kann den Wert 0 erreichen, wenn sich alle Anlagenblindleistungen aufheben. Für den theoretischen Fall, dass alle Anlagenblindleistungen 0 sind, wird für das Verhältnis der Wert 1 angenommen, bzw. das Vergleichsmaß als 1 definiert. Jedenfalls stellt der Wert 1 den optimalen Fall für das Vergleichsmaß dar, denn dann gibt es keine Anlagenblindleistungen mit unterschiedlichen Vorzeichen. Der Wert 1 ist daher durch entsprechende Wahl der Anlagenoffsets anzustreben. Sollte er aber etwas geringer ausfallen, nämlich im Bereich von 0,5 bis 0,95 liegen, so ist das nicht optimal aber besser als unter den Wert von 0,5 zu fallen.

Außerdem oder alternativ werden die Anlagenoffsets so bestimmt, dass das Vergleichsmaß nicht kleiner ist, oder zumindest nicht weniger al 90% des Vergleichsmaßes beträgt als für den Fall, dass alle Anlagenoffsets null sind. Die Anlagenoffsets sollen also so gewählt werden, dass sich die Situation durch sie nicht oder nicht signifikant verschlechtert.

Durch den Vorschlag ohne die individuellen Anlagenoffsets kann erreicht werden, dass die Blindleistungen aller Windenergieanlagen durch individuelle Spannungssollwerte gleich werden. Somit sind die Blindleistungen der Windenergieanlage im ausgeregelten Zustand unabhängig von den Ist-Spannungen sowie den Ist-Wirkleistungen der Windenergieanlagen.

Nun wird durch die individuellen Anlagenoffsets ergänzend Folgendes vorgeschlagen. Es wird nämlich vorgeschlagen, durch das Aufsummieren eines Satzes von Offset-Werten, die Aufteilung der Parkblindleistungssollwerte zwischen den Windenergieanlagen zu weiteren Optimierungszwecken zu beeinflussen. Solche Optimierungszwecke können u. a. eine Verlustoptimierung oder eine optimierte Spannungshaltung beinhalten. Zum Beispiel kann es für die Verlustoptimierung sinnvoll sein, dass sich Windenergieanlagen, die näher zum Netzanschlusspunkt stehen, im Vergleich zu den anderen Windenergieanlagen stärker an einer Blindleistungsbereitstellung beteiligen.

Bei der Bestimmung der Offset-Werte für die Windenergieanlagenblindleistungen, also der Anlagenoffsets, wird vorgeschlagen, dass neben dem Optimierungszweck, oder stattdessen, zwei weitere Einschränkungen berücksichtigt werden, oder zumindest eine davon:

Die Summe aller Offset-Werte, also aller Anlagenoffsets, soll gleich null sein, damit der Parkblindleistungssollwert durch die Offset-Werte nicht beeinflusst wird.

Die Offset-Werte sollten derart gewählt bzw. online oder offline ermittelt werden, dass eine gegenläufige Kombination der Windenergieanlagenblindleistungen, d.h. kapazitive und induktive Blindleistungen zeitgleich durch verschiedene Windenergieanlagen ausgeschlossen ist, zumindest nicht signifikant ist.

Die Anlagenoffsets können insbesondere feste Werte sein, oder abhängig von Betriebsgrößen wie Spannungen, Mittelwert der Anlagenblindleistungen aller Windenergieanlagen des Windparks, Wirkleistung und Blindleistung der einzelnen Windenergieanlagen oder Zustände vorgegeben werden. Ein Zustand, z.B. ein gewünschter Zustand, kann bspw. darin bestehen, dass der Mittelwert der Blindleistungen aller Windenergieanlagen nahezu 0 ist. Ein anderer Zustand kann sein, wenn einzelne Windenergieanlagen ihre Scheinleistungsgrenze erreichen. Aus erfassten Größen können Zustände abgeleitet werden, das kann online ermittelt werden.

Gemäß einem Aspekt wird vorgeschlagen, dass der individuelle Steuerkorrekturwert, insbesondere Spannungskorrekturwert, der zum Bestimmen des jeweiligen individuellen Anlagensteuersollwertes, insbesondere individuellen Anlagenspannungssollwertes aus dem Parksteuersollwert, insbesondere Parkspannungssollwert verwendet wird, jeweils so bestimmt wird, dass eine Summe über alle individuellen Steuerkorrekturwerte, bzw. Spannungskorrekturwerte null ist. Mit anderen Worten werden also alle individuellen Steuerkorrekturwerte bzw. Spannungskorrekturwerte so bestimmt, dass ihre Summe null ist.

Dadurch kann erreicht werden, dass der ursprünglich vorgegebene Parksteuersollwert bzw. Parkspannungssollwert zwar individuell modifiziert wird, ein Mittelwert aller individuellen Anlagensteuerwerte bzw. Anlagenspannungssollwerte aber gleichbleibt. Hier liegt besonders der Gedanke zu Grunde, dass die jeweils individuell veränderten Anlagensteuersollwerte bzw. Anlagenspannungssollwerte, also gegenüber dem Parksteuersollwert bzw. Parkspannungssollwert veränderten Werte, durch den Blindleistungsregler jeder Anlage jeweils einer entsprechend veränderten Blindleistung zugeordnet werden. Dadurch, dass der Mittelwert aller individuellen Anlagensteuersollwerte bzw. Anlagenspannungssollwerte gleichbleibt, kann dadurch auch erreicht werden, dass der Mittelwert aller Blindleistungen gleichbleibt und damit die insgesamt vom Windpark erzeugte Blindleistung, mit anderen Worten also die Summe aller Anlagenblindleistungen, gleichbleibt. Dadurch kann erreicht werden, dass das Modifizieren der individuellen Anlagensteuersollwerte bzw. Anlagenspannungssollwerte tatsächlich nur eine Symmetrierung im Windpark beeinflusst, nicht aber die insgesamt erzeugte Blindleistung des Parks, also die Parkblindleistung verändert wird.

Diese Maßnahme, dass die Summe über alle individuellen Anlagensteuersollwerte bzw. Anlagenspannungssollwerte null ist, wird sowohl für die Lösung mit also auch ohne individuelle Anlagenoffsets vorgeschlagen.

Gemäß einem Aspekt wird vorgeschlagen, dass die individuelle Anlagenblindleistung so bestimmt wird, dass einer Spannungsdifferenz als Differenz zwischen dem individuellen Anlagenspannungssollwert und einer an der jeweiligen Windenergieanlage anliegenden Anlagenistspannung durch Einstellen der individuellen Anlagenblindleistung entgegengewirkt wird. Die individuelle Anlagenblindleistung kann auch durch entsprechende Vorgabe eines Anlagenblindstroms realisiert werden. Hier wird besonders vorgeschlagen, dass ein bereits oben beschriebener P-Regler als Blindleistungsregler verwendet wird, bei dem diese Spannungsdifferenz mit einem Faktor multipliziert wird, um dadurch einen Blindstrom zu berechnen, oder eine Blindleistung. Dieser Blindstrom wirkt der Spannungsdifferenz entgegen. Es muss aber kein P-Regler sein, sondern es kann auch ein anderer Regler als ein P-Regler verwendet werden, die Verwendung eines P-Reglers als Blindleistungsregler hat sich hier aber als vorteilhaft und insbesondere auch als schneller Regler erwiesen.

Über die Verwendung eines solchen Blindleistungsreglers, der über diese Spannungsdifferenz eine Blindleistung bzw. einen Blindstrom vorgibt, zusammen mit dem individuellen Einstellen des individuellen Anlagenspannungssollwertes kann somit die durch jede einzelne Windenergieanlage zu erzeugende Anlagenblindleistung individuell eingestellt werden und dadurch die gewünschte Symmetrierung erreicht werden.

Gemäß einem Aspekt wird vorgeschlagen, dass die Windenergieanlagen jeweils ihre abgegebene individuelle Anlagenblindleistung als Anlagenblindleistungsistwert erfassen und an eine zentrale Steuereinheit des Windparks übertragen, zum Verwenden in der Bestimmung aller individueller Anlagensteuersollwerte, insbesondere Anlagenspannungssollwerte. Vorzugsweise wird dazu vorgeschlagen, dass gleichwohl die Windenergieanlagen aber einen Blindstrom in Abhängigkeit von ihren individuellen Anlagenspannungssollwerten bestimmen.

Die von den Windenergieanlagen erfassten und übertragenen Anlagenblindleistungsistwerte werden somit in der zentralen Steuereinheit des Windparks zusammengeführt und daraus kann besonders der Mittelwert aller individuellen Anlagenblindleistungen bzw. Anlagenblindleistungsistwerte bestimmt werden. Besonders der individuelle Steuerkorrekturwert, insbesondere Spannungskorrekturwert wird aus einer Mittelwertdifferenz als Differenz zwischen der jeweiligen individuellen Anlagenblindleistung und dem Mittelwert aller individuellen Anlagenblindleistungen bestimmt.

Diese Bestimmung erfolgt individuell für jede Windenergieanlage. Dabei wird jeweils die der Windenergieanlage zugeordnete individuelle Anlagenblindleistung verwendet, aber der Mittelwert aller individuellen Anlagenblindleistungen ist für jede Windenergieanlage derselbe. Daher wird auch insbesondere vorgeschlagen, dass der Mittelwert über alle individuellen Anlagenblindleistungen gebildet wird, also über die Anlagenblindleistungen aller Windenergieanlagen, einschließlich der Windenergieanlage, die jeweils betrachtet wird. Es braucht dann nur eine Mittelwertbildung durchgeführt zu werden.

Die Bestimmung der individuellen Anlagensteuerwerte, insbesondere Anlagenspannungssollwerte, insbesondere der individuellen Steuerkorrekturwerte bzw. Spannungskorrekturwerte kann ebenfalls in der zentralen Steuereinheit erfolgen. Vorzugsweise erfolgt die Bestimmung der individuellen Anlagensteuerwerte, bzw. Anlagenspannungssollwerte und insbesondere der individuellen Steuerkorrekturwerte bzw. Spannungskorrekturwerte jeweils in der betreffenden Windenergieanlage. Sie kann dafür von der zentralen Steuereinheit des Windparks den Mittelwert aller individuellen Anlagenblindleistungen erhalten. Hier wurde besonders erkannt, dass insbesondere oder sogar nur das Bestimmen des Mittelwertes aller individuellen Anlagenblindleistungen zentral erfolgen sollte. Ebenso wurde erkannt, dass das Übertragen nur dieses einen Mittelwertes von der zentralen Steuereinheit des Windparks an die einzelnen Windenergieanlagen mit geringem Aufwand erfolgen kann.

Gemäß einem Aspekt wird vorgeschlagen, dass die individuelle Anlagenblindleistung jeweils berücksichtig und/oder übertragen wird als relativer, insbesondere prozentualer Wert bezogen auf eine maximal verfügbare Anlagenblindleistung der jeweiligen Windenergieanlage oder bezogen auf eine Nennblindleistung oder Nennwirkleistung der jeweiligen Windenergieanlage. Dadurch kann die Höhe der individuellen Anlagenblindleistung an die Größe der Windenergieanlage angepasst werden.

Hier wurde besonders auch erkannt, dass die Effizienz dadurch gesteigert werden kann, dass die erzeugte Blindleistung der Höhe nach an die erzeugte Wirkleistung angepasst wird. Hier liegt besonders die Erkenntnis zu Grunde, dass auch das Erzeugen von Blindleistung zumindest etwas Verlustleistung, also Verlustwirkleistung nach sich zieht und daher eine geringere Effizienz für eine Windenergieanlage folgen würde, sollte sie wenig Wirkleistung erzeugen, aber gleichzeitig viel Blindleistung erzeugen müssen. Dies wäre zwar möglich, aber nicht sehr effizient. Das kann durch die Vorgabe relativer, insbesondere prozentualer Werte vermieden werden.

Gemäß einem Aspekt wird vorgeschlagen, dass der individuelle Steuerkorrekturwert, insbesondere Spannungskorrekturwert zum Bestimmen des jeweiligen individuellen Anlagensteuersollwertes, insbesondere Anlagenspannungssollwertes aus dem Parksteuersollwert, insbesondere Parkspannungssollwert, durch Vorgabe einer Korrekturbegrenzung begrenzbar ist. Dazu wird vorgeschlagen, dass zur Begrenzung der individuellen Steuerkorrekturwerte, bzw. Spannungskorrekturwerte die Korrekturbegrenzung so auf alle individuellen Steuerkorrekturwerte bzw. Spannungskorrekturwerte angewendet wird, dass eine Summe aller individuellen Steuerkorrekturwerte bzw. Spannungskorrekturwerte gleichbleibt, insbesondere null bleibt.

Hier wurde erkannt, dass durch die Vorgabe einer Korrekturbegrenzung die Symmetrierung begrenzt werden kann. Es wurde erkannt, dass es nicht unbedingt sinnvoll ist, eine Symmetrierung beliebig stark vorzunehmen. Eine vorgeschlagene Korrekturbegrenzung kann besonders für die folgende Situation vorteilhaft sein. Falls für individuelle Anlagensteuersollwerte bzw. Spannungssollwerte, nämlich Anlagenspannungssollwerte minimale und maximale Grenzen definiert sind, können diese Grenzen durch individuelle Steuerkorrekturwerte bzw. Spannungskorrekturwerte zwecks Symmetrierung bei einigen Windenergieanlagen erreicht werden. Somit kann die angestrebte Parkblindleistung nicht erreicht werden. Dieser Fall kann durch die Vorgabe einer Korrekturbegrenzung vermieden werden.

Dabei wurde weiter erkannt, dass eine Begrenzung zu einer Asymmetrie führen kann, besonders, wenn im vorliegenden Fall naturgemäß eine Begrenzung nur einige aber nicht alle Windenergieanlagen betreffen würde. Daher wird vorgeschlagen, eine Begrenzung so umzusetzen, dass eine Summe aller individueller Steuerkorrekturwerte bzw. Spannungskorrekturwerte nicht verändert wird. Vorzugsweise ist die Summe aller individuellen Steuerkorrekturwerte bzw. Spannungskorrekturwerte auch ohne Begrenzung null und daher wird vorgeschlagen, die Begrenzung so umzusetzen, dass auch nach der Begrenzung die Summe aller individuellen Steuerkorrekturwerte bzw. Spannungskorrekturwerte null ist.

Dadurch wird erreicht, dass auch bei Verwendung einer Begrenzung der Grundsatz erhalten bleibt, dass die vorgesehene Symmetrierung durch Modifizieren der individuellen Anlagensteuersollwerte bzw. Anlagenspannungssollwerte möglichst nicht die insgesamt vom Windpark abgegebene Blindleistung verändert. Dass eine Summe aller individuellen Steuerkorrekturwerte bzw. Spannungskorrekturwerte gleichbleibt, kann bspw. dadurch erreicht werden, dass diese Summe gebildet wird und dann, wenn sie sich verändert, insbesondere, wenn sie den Wert null verlässt, die individuellen Steuerkorrekturwerte bzw. Spannungskorrekturwerte so verändert werden, dass die Summe wieder auf null zurückgeführt wird.

Besonders kann dafür, dass die Summe aller individuellen Steuerkorrekturwerte bzw. Spannungskorrekturwerte gleichbleibt, der folgende Aspekt vorgeschlagen werden.

Gemäß einem Aspekt wird somit vorgeschlagen, dass im Falle einer Vorgabe der Korrekturbegrenzung und wenn wenigstens ein individueller Steuerkorrekturwert bzw. Spannungskorrekturwert, also bevor er begrenzt wird, die Korrekturbegrenzung überschreitet, ein Begrenzungsverhältnis gebildet wird. Dieses Begrenzungsverhältnis wird als Verhältnis zwischen der Korrekturbegrenzung und einem maximalen Steuerkorrekturwert bzw. Spannungskorrekturwert gebildet.

Der maximale Steuerkorrekturwert bzw. Spannungskorrekturwert ist der dem Betrage nach größte Wert aller individuellen Steuerkorrekturwerte bzw. Spannungskorrekturwerte, bevor sie begrenzt werden. Das Verhältnis zwischen der Korrekturbegrenzung und dem maximalen Steuerkorrekturwert bzw. Spannungskorrekturwert ist insbesondere als Quotient zwischen diesen beiden Werten zu verstehen, also ein Quotient der Korrekturbegrenzung geteilt durch den maximalen Steuerkorrekturwert bzw. Spannungskorrekturwert.

Im Falle, wenn wenigstens ein individueller Steuerkorrekturwert bzw. Spannungskorrekturwert die Korrekturbegrenzung überschreitet, überschreitet natürlich auch der maximale Steuerkorrekturwert bzw. Spannungskorrekturwert die Korrekturbegrenzung. Der Quotient aus Korrekturbegrenzung durch diesen maximalen Steuerkorrekturwert bzw. Spannungskorrekturwert ist somit kleiner als 1.

Weiter wird vorgeschlagen, dass jeder individuelle Steuerkorrekturwert, bzw. Spannungskorrekturwert mit dem Begrenzungsverhältnis multipliziert wird, um dadurch jeweils einen individuellen modifizierten Steuerkorrekturwert bzw. Spannungskorrekturwert zu bilden. Dieser wird dann zum Bestimmen der jeweiligen individuellen Anlagensteuerwerte bzw. Anlagenspannungssollwerte aus dem Parksteuerwert bzw. Parkspannungssollwert verwendet. Der Parksteuersollwert bzw. Parkspannungssollwert wird also nicht mehr durch den individuellen Steuerkorrekturwert bzw. Spannungskorrekturwert, sondern durch den individuellen modifizierten Steuerkorrekturwert bzw. Spannungskorrekturwert modifiziert.

Hierbei liegt der Gedanke zu Grunde, dass die Multiplikation des maximalen Steuerkorrekturwert bzw. Spannungskorrekturwertes mit dem Begrenzungsverhältnis der Korrekturbegrenzung entspricht. Der maximale Steuerkorrekturwert bzw. Spannungskorrekturwert wird dadurch also auf die Korrekturbegrenzung begrenzt.

Alle übrigen Steuerkorrekturwerte bzw. Spannungskorrekturwerte werden durch die Multiplikation mit diesem Begrenzungsverhältnis um den gleichen Wert verändert. Dadurch wird im Ergebnis erreicht, dass die Summe aller individuellen Steuerkorrekturwerte bzw. Spannungskorrekturwerte null bleibt.

Es ist dabei zu beachten, dass positive und negative Steuerkorrekturwerte bzw. Spannungskorrekturwerte auftreten, denn nur so kann ihre Summe null werden. Bei der Multiplikation mit dem Begrenzungsverhältnis werden sämtliche Steuerkorrekturwerte bzw. Spannungskorrekturwerte dem Betrage nach verringert. Dadurch werden sowohl positive als auch negative individuelle Steuerkorrekturwerte bzw. Spannungskorrekturwerte dem Betrage nach verringert, sodass die Summe weiterhin null bleiben kann.

Gemäß einem Aspekt wird vorgeschlagen, dass im Falle des Auftretens eines Netzfehlers, insbesondere in einem FRT-, LVRT- oder OVRT-Fall an einer, einigen oder allen Windenergieanlagen eine Statik verändert wird, die einen Zusammenhang zwischen Anlagenspannungsdifferenz und einem von der jeweiligen Windenergieanlage einzuspeisenden Anlagenblindstrom vorgibt. Die Statik wird somit gegenüber einer Situation ohne Netzfehler verändert. Dadurch kann besonders eine spannungs- bzw. spannungsdifferenzabhängige Blindleistungseinspeisung in ihrer Dynamik verändert werden, um dadurch auf den Netzfehler zu reagieren.

Als Netzfehler kommt besonders eine Situation in Betracht, die als FRT-, also als Fehlerdurchschreitung (Fault Ride Through) bezeichnet werden kann. Besonders geht es um Spannungseinbrüche, also einen sog. LVRT- (Low Voltage Ride Through) Fall oder um einen Überspannungsfall, besonders einen OVRT- (Over Voltage Ride Through) Fall. Hier wird zudem vorgeschlagen, in Abhängigkeit von der Spannungsdifferenz einen Anlagenblindstrom vorzugeben.

Besonders in einem solchen Fall, in dem die Spannung ihren normalen Bereich verlässt, hat dies einen starken Einfluss auf die Blindleistung. Besonders bei einem sehr starken Spannungseinbruch kann u.U. eine gewünschte Blindleistung nicht mehr eingespeist werden, aber ein Blindstrom kann noch eingespeist werden, sodass das Vorgeben eines Blindstroms vorgeschlagen wird. Dazu kann besonders eine entsprechend angepasste, also gegenüber dem Fall ohne Netzfehler veränderte Statik verwendet werden.

Außerdem oder alternativ wird vorgeschlagen, dass im Falle des Auftretens eines Netzfehlers das Bestimmen der individuellen Anlagenblindleistung bzw. des individuellen Anlagenblindstroms an einer, einigen oder allen Windenergieanlagen in ein vereinfachtes Alternativverfahren geändert wird. Hier wurde besonders erkannt, dass die vorgeschlagene Symmetrierung in einem solchen Netzfehlerfall ausgesetzt werden kann. Hier wurde zum einen erkannt, dass die Symmetrierung in einem Netzfehlerfall weniger wichtig ist. Zum anderen wurde erkannt, dass in einem Netzfehlerfall die Blindleistungsvorgabe nicht mehr von einer von extern vorgegebenen Blindleistungseinspeisung abhängt. Vielmehr wird dann auf das Spannungsverhalten des elektrischen Versorgungsnetzes direkt und unmittelbar reagiert.

Insbesondere wird vorgeschlagen, dass jeweils die betreffende Windenergieanlage einen individuellen Anlagenblindstrom in Abhängigkeit von der erfassten an der jeweiligen Windenergieanlage anliegenden Anlagenistspannung und einen fest vorgegebenen Spannungssollwert bestimmt. Insbesondere bestimmt die betreffende Windenergieanlage den Blindstrom in Abhängigkeit von einer Anlagenspannungsdifferenz als Differenz zwischen der Anlagenistspannung und diesen fest vorgegebenen Spannungssollwert.

Das vereinfachte Alternativverfahren ist somit ein Verfahren, das temporär ohne die vorgeschlagene Symmetrierung der Blindleistung im Windpark auskommt, Es kann nur unter Verwendung einer Statik für jede Windenergieanlage arbeiten. Die jeweils an der Windenergieanlage verwendete Statik beschreibt besonders einen vorgegebenen Zusammenhang zwischen einer Spannungsabweichung an der Windenergieanlage, nämlich eine Abweichung der Spannung an der Windenergieanlage von einem Spannungsreferenzwert, insbesondere einer Nennspannung. Diese Statik, also dieser Zusammenhang kann aber auch komplexer sein, bspw. Stufen aufweisen, sodass der Zusammenhang bspw. in unterschiedlichen Bereichen der Spannungsabweichung unterschiedliche Steigungen aufweist. Außerdem oder alternativ wird vorgeschlagen, dass jeweils die betreffende Windenergieanlage einen individuellen Anlagenblindstrom in Abhängigkeit von einem von der betreffenden Windenergieanlage vor dem Auftreten des Netzfehlers eingespeisten Blindstrom bestimmt. Dadurch kann ebenfalls ein vereinfachtes Verfahren bereitgestellt werden.

Außerdem oder alternativ wird vorgeschlagen, dass das vereinfachte Alternativverfahren eine veränderte Statik verwendet, die einen Zusammenhang zwischen einer bzw. der Spannungsdifferenz und dem individuellen Anlagenblindstrom angibt. Diese Statik ist im Vergleich zum Steuern jeder Windenergieanlage ohne das vereinfachte Alternativverfahren verändert. Besonders ist eine steilere Statik für das vereinfachte Alternativverfahren vorgesehen, also eine Statik mit größerer Steigung, also größerem Verstärkungsfaktor zwischen Anlagenspannungsdifferenz und Blindstrom.

Hier wurde zudem erkannt, dass im Falle eines Netzfehlers auch Kommunikationswege innerhalb des Windparks, insbesondere zwischen einzelnen Windenergieanlagen und einer zentralen Parksteuerung, gestört sein können. Dazu kann der fest vorgegebene Spannungssollwert verwendet werden, der in jeder Windenergieanlage hinterlegt sein kann. Das ist das Alternativverfahren, bzw. Teil des Alternativverfahrens. Somit wird besonders vorgeschlagen, dass in diesem Netzfehlerfall die Windenergieanlagen im Grunde selbstständig und/oder autark arbeiten.

Insbesondere wird vorgeschlagen, dass für die Windenergieanlagen, die zum vereinfachten Alternativverfahren wechseln, das Bestimmen eines individuellen Anlagenspannungssollwertes eingefroren wird, bis der Netzfehler beendet ist und/oder bis die Windenergieanlagen das vereinfachte Alternativverfahren wieder verlassen haben.

Insbesondere wird vorgesehen, dass bei Verwendung eines Reglers mit integralem Anteil der integrale Anteil eingefroren wird. Insbesondere ist ein solches Einfrieren für einen Regler vorgesehen, der jeweils zum Berechnen eines individuellen Steuerkorrekturwertes bzw. Spannungskorrekturwertes verwendet wird. Er kann einen PI-Regler enthalten bzw. ein PI-Regler sein, und für ihn wurde festgestellt, dass es von Vorteil ist, im Netzfehlerfall, wenn dieser Regler dann nicht mehr verwendet wird, sein integraler Anteil eingefroren wird. Er hält also seine Ausgangswerte und ignoriert für diesen Zeitraum des Einfrierens seiner Eingangswerte. Sobald der Netzfehler vorüber ist, kann der Regler zur Bestimmung des individuellen Steuerkorrekturwertes bzw. Spannungskorrekturwertes seine Arbeit wie vor dem Netzfehler fortsetzen.

Als Kriterium, wie lange eingefroren wird, kann die Dauer des Netzfehlers berücksichtigt werden, oder alternativ oder zusätzlich, ob die Windenergieanlage das vereinfachte Verfahren wieder verlassen hat. Dieses ist regelmäßig auch ein Indikator für das Ende des Netzfehlers. Wenn beide Kriterien zugleich betrachtet werden, sollte das Einfrieren beendet werden, wenn beide Kriterien erfüllt sind.

Gemäß einem Aspekt wird vorgeschlagen, dass im Falle des Auftretens eines Netzfehlers, insbesondere in einem FRT-, LVRT- oder OVRT-Fall, wenn das Bestimmen der individuellen Anlagenleistung an einer oder einigen, aber nicht an allen Windenergieanlagen in ein vereinfachtes Alternativverfahren geändert wird, das Bestimmen der individuellen Anlagensteuersollwerte, insbesondere Anlagenspannungssollwerte für die übrigen Windenergieanlagen fortgesetzt wird, also für die Windenergieanlagen fortgesetzt wird, an denen nicht in das vereinfachte Alternativverfahren gewechselt wurde.

Dazu wird vorgeschlagen, dass zur Bestimmung der individuellen Anlagensteuersollwerte bzw. Anlagenspannungssollwerte eine Summe aller eingespeisten Blindleistungen von nur den Windenergieanlagen verwendet wird, an denen nicht in das vereinfachte Alternativverfahren geändert wurde. Somit wird hier vorgeschlagen, dass die Symmetrierung an den verbleibenden Windenergieanlagen fortgesetzt wird, wenn nur einige der Windenergieanlagen von dem Netzfehlerfall betroffen sind.

Gemäß einem Aspekt wird vorgeschlagen, dass ein Korrekturregler zum Bestimmen des individuellen Steuerkorrekturwertes, insbesondere Spannungskorrekturwertes aus der Mittelwertdifferenz als Differenz zwischen der jeweiligen individuellen Anlagenblindleistung und einem Mittelwert aller individuellen Anlagenblindleistungen, jeweils so parametriert wird, dass er ähnlich schnell oder schneller als ein Parkregler zum Bestimmen des Parksteuersollwertes, insbesondere Parkspannungssollwertes ist, und/oder dass der Korrekturregler eine Regelungszeitkonstante aufweist, die maximal doppelt so groß wie eine Regelungszeitkonstante des Parkreglers ist, insbesondere kleiner als eine Regelungszeitkonstante des Parkreglers ist.

Hier wurde besonders erkannt, dass der Steuerkorrekturwert bzw. Spannungskorrekturwert über einen Korrekturregler bestimmt werden kann. Der Korrekturregler kann insbesondere als PI-Regler ausgebildet sein. Dadurch weist er eine Dynamik auf, die möglichst in keinem Konflikt zu der Dynamik des Parkreglers stehen sollte, der den Parksteuersollwert bzw. Parkspannungssollwert bestimmt, nämlich aus dem Parkblindleistungssollwert und einem bzw. dem Parkblindleistungsistwert. Ein solcher Parkregler kann ebenfalls ein PI-Regler sein, um eine stationäre Genauigkeit für die Parkblindleistung zu erreichen, um also den Parkblindleistungsistwert an den Parkleistungssollwert heranzuführen.

Um einen solchen Konflikt zwischen beiden Dynamiken der beiden Regler zu vermeiden, wurde besonders erkannt, dass der Korrekturregler nicht signifikant langsamer als der Parkregler sein sollte. Daher wird vorgeschlagen, den Korrekturregler entsprechend schnell zu wählen und das kann über die Festlegung der Regelungszeitkonstante erfolgen. Je kleiner sie ist, umso schneller ist der entsprechende Regler.

Es wurde erkannt, dass er etwas langsamer als der Parkregler sein dürfte, sodass eine doppelte Regelungszeitkonstante noch zulässig wäre. Vorzugsweise ist die Regelungszeitkonstante des Korrekturreglers aber kleiner zu wählen als die Regelungszeitkonstante des Parkreglers. Dazu wurde besonders auch erkannt, dass sich eine Gesamtstruktur ergibt, bei der der Korrekturregler zu dem Parkregler eine innere Kaskade bilden kann, die vorzugsweise eine schnellere Regeldynamik als die äußere Kaskade haben sollte.

Erfindungsgemäß wird auch ein Windpark vorgeschlagen. Der Windpark ist zum Bereitstellen einer Parkblindleistung durch mehrere Windenergieanlagen des Windparks vorbereitet, wobei der Windpark eine Steuerung aufweist, die dazu vorbereitet ist, ein Verfahren mit den folgenden Schritten auszuführen:

- Empfangen eines eine Parkblindleistung kennzeichnenden oder beeinflussenden Parkvorgabesollwertes zur Vorgabe einer durch den Windpark einzuspeisenden Parkblindleistung,

- Bestimmen eines Parksteuersollwertes als gemeinsamen Vorgabewert für alle Windenergieanlagen in Abhängigkeit von dem Parkvorgabewert,

- Bestimmen eines individuellen Anlagensteuersollwertes jeweils für eine der Windenergieanlagen in Abhängigkeit von dem Parksteuersollwert,

- Bestimmen und Abgeben einer individuellen Anlagenblindleistung jeweils durch eine der Windenergieanlagen in Abhängigkeit von einer Anlagenspannungsdifferenz als Differenz zwischen einer Anlagenistspannung und einem individuellen Anlagenspannungssollwert der jeweiligen Windenergieanlage, wobei der individuelle Anlagenspannungssollwert aus dem individuellen Anlagensteuersollwert der jeweiligen

Windenergieanlage bestimmt wird, oder dem individuellen Anlagensteuersollwert entspricht, und wobei

- der individuelle Anlagensteuersollwert jeweils in Abhängigkeit von der individuellen Anlagenblindleistung der jeweiligen Windenergieanlage und in Abhängigkeit von mehreren, insbesondere allen individuellen Anlagenblindleistungen der Windenergieanlagen des Windparks bestimmt wird.

Besonders kann der Windpark dadurch zum Ausführen des Verfahrens vorbereitet sein, dass entsprechende Steuereinheiten vorgesehen sind, auf denen das Verfahren implementiert ist. Insbesondere ist eine zentrale Parksteuerung vorgesehen zum Empfangen des Parkvorgabewertes, insbesondere Parkblindleistungssollwertes und zum Bestimmen des Parksteuersollwertes, insbesondere Parkspannungssollwertes. Das Bestimmen eines individuellen Anlagensteuerwertes, insbesondere Anlagenspannungssollwertes und das Bestimmen einer individuellen Anlagenblindleistung erfolgt vorzugsweise jeweils in einer Anlagensteuerung der jeweiligen Windenergieanlage.

In einer solchen Anlagensteuerung sind jeweils die entsprechenden Verfahrensschritte dafür implementiert. Die Berücksichtigung einiger, mehrerer oder aller individuellen Anlagenblindleistungen der Windenergieanlagen des Windparks kann mithilfe der zentralen Parksteuerung vorgesehen sein. Insbesondere kann die zentrale Parksteuerung eine Mittelwertbildung aller Anlagenblindleistungen der Windenergieanlagen des Windparks vornehmen. Ein solcher Mittelwert kann dann zur weiteren Verwendung von der zentralen Parksteuerung an die einzelnen Anlagensteuerungen übermittelt werden. Die zentrale Parksteuerung kann Schnittstellen zum Empfangen von Anlagenblindleistungsistwerten aufweisen, um aus diesen Anlagenblindleistungsistwerten den Mittelwert aller Anlagenblindleistungen zu bestimmen.

Es kommt aber auch in Betracht, dass selbst die individuellen Anlagensteuerwerte, insbesondere Anlagenspannungssollwerte in der zentralen Parksteuerung berechnet und an die einzelnen Windenergieanlagen übergeben werden. Zur Bestimmung der jeweiligen Anlagenblindleistung kann jede Windenergieanlage für sich arbeiten und dafür den individuellen Anlagenspannungssollwert verwenden sowie eine an der jeweiligen Windenergieanlage gemessene Anlagenistspannung.

Die Steuerung des Windparks ist somit insbesondere als verteilte Steuereinrichtung zu verstehen und die Steuerung des Windparks kann auch synonym als Steuereinrichtung bezeichnet werden. Diese Steuereinrichtung wird insbesondere durch die zentrale Parksteuerung und mehrere Anlagensteuerungen gebildet, wobei die Anlagensteuerungen jeweils an einer Windenergieanlage angeordnet sind und über eine Kommunikationsverbindung mit der zentralen Parksteuerung verbunden sind. Insbesondere wird vorgeschlagen, dass die zentrale Parksteuerung und die Anlagensteuerungen zur Kommunikation über ein Bussystem miteinander verbunden sind.

Gemäß einem Aspekt wird vorgeschlagen, dass der Windpark die zentrale Parksteuereinheit und mehrere Anlagensteuerungen aufweist, wobei jeweils eine der Anlagensteuerungen an jeweils einer Windenergieanlage angeordnet ist, die Anlagensteuerungen mit der Parksteuereinheit über ein Kommunikationssystem verbunden sind, insbesondere über ein Datenbussystem, und ein Verfahren zum Bereitstellen der Parkblindleistung auf der zentralen Parksteuereinheit und den mehreren Anlagensteuerungen implementiert ist.

Hier wurde besonders erkannt, dass das Verfahren zum Bereitstellen der Parkblindleistung teilweise an einer zentralen Stelle und teilweise an den Anlagen auszuführen ist, sodass die Verwendung der zentralen Parksteuereinheit und der mehreren Anlagensteuerungen vorgeschlagen wird.

Gemäß einem Aspekt wird vorgeschlagen, dass der Windpark dazu vorbereitet ist, ein Verfahren gemäß einer der vorstehend erläuterten Ausführungsformen auszuführen und/oder dass ein Verfahren gemäß einem der vorstehenden Ausführungsformen in der zentralen Parksteuereinheit und den mehreren Anlagensteuerungen implementiert ist. Dadurch kann ein so aufgebauter Windpark die Vorteile des Verfahrens gemäß den beschriebenen Aspekten ausnutzen.

Die Erfindung wird nun nachfolgend anhand von Ausführungsformen beispielhaft unter Bezugnahme auf die begleitenden Figuren näher erläutert.

Figur 1    zeigt eine Windenergieanlage in einer perspektivischen und schematischen Ansicht.

Figur 2    zeigt einen Windpark in einer schematischen Darstellung.

Figur 3    zeigt schematisch mit Darstellung nur einer Windenergieanlage eine Blindleistungssteuerung in einem Windpark.

Figur 4    veranschaulicht an zwei Zeitdiagrammen die Dynamik einer Blindleistungseinspeisung basierend auf einer vorgegebenen Parkspannung.

Figur 5    zeigt schematisch eine Blindleistungssteuerung in einem Windpark, ähnlich wie Figur 3, aber mit exemplarisch zwei dargestellten Windenergieanlagen.

Figur 6    zeigt ein veranschaulichendes Zeitdiagramm zum Erläutern von Problemen, die durch eine Blindleistungssteuerung gemäß der Struktur der Figur 5 auftreten können.

Figur 7    zeigt ein weiteres Zeitdiagramm zur Veranschaulichung von einem weiteren Problem, das durch die Blindleistungssteuerung gemäß der Struktur der Figur 5 auftreten kann.

Figur 8    zeigt schematisch eine Struktur zur Blindleistungssteuerung in einem Windpark zur Symmetrierung der Blindleistung der einzelnen Windenergieanlagen.

Figur 9    zeigt eine gegenüber Figur 8 erweiterte Struktur.

Figur 10    zeigt schematisch eine Struktur zur Blindleistungssteuerung in einem Windpark zur Symmetrierung der Blindleistung der einzelnen Windenergieanlagen ähnlich zu Figur 9 aber in einer anderen Konstellation.

Figur 11    zeigt einen Aufbau ähnlich Figur 5 mit einem weiteren Detail.

Figur 12    zeigt einen ähnlichen Aufbau wie Figur 11 aber mit einer Abwandlung.

Figur 13    zeigt einen Aufbau ähnlich zu Figur 9 mit einem weiteren Detail.

Figur 14    zeigt eine innere Struktur einer zentralen Parksteuerung.

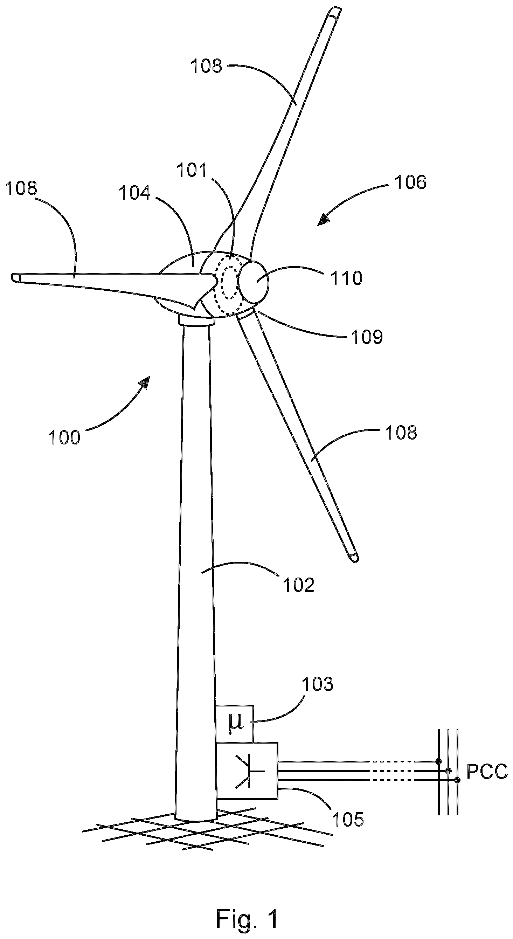

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden. Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

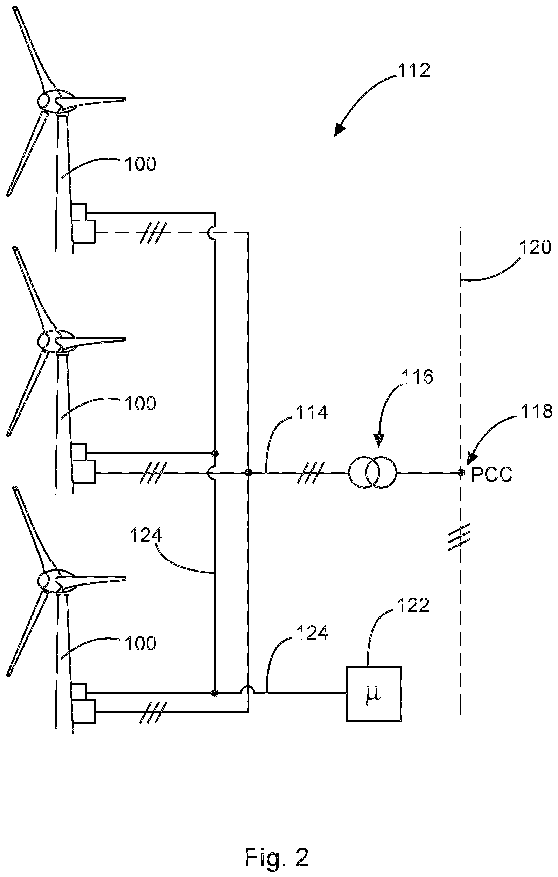

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112. Es kann bspw. das Parknetz 114 anders gestaltet sein, indem bspw. auch ein Transformator am Ausgang jeder Windenergieanlage 100 vorhanden ist, um nur ein anderes Ausführungsbeispiel zu nennen.

Der Windpark 112 weist zudem einen zentralen Parkrechner 122 auf, der synonym auch als zentrale Parksteuerung oder zentrale Parksteuereinheit bezeichnet werden kann. Dieser kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen.

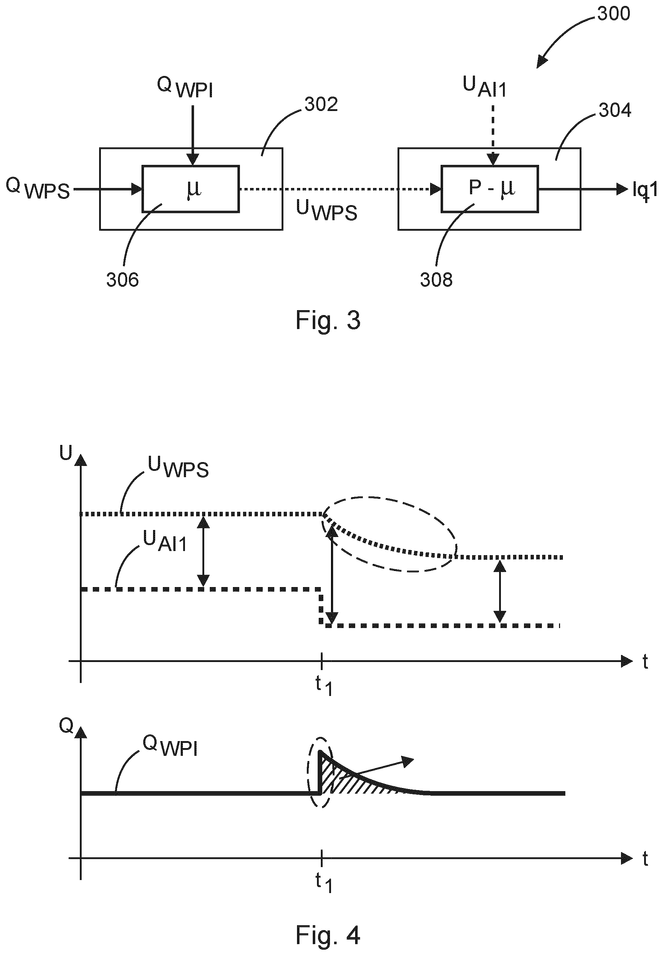

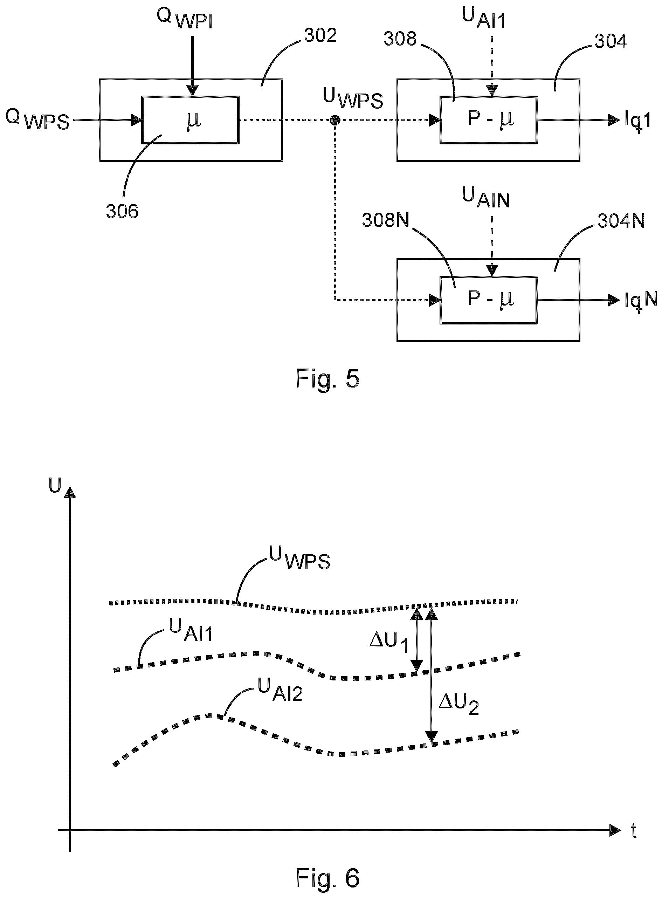

Figur 3 zeigt schematisch eine Steuerungsstruktur 300 eines Windparks, die besonders eine Interaktion zwischen einer zentralen Parksteuerung 302 und einer Windenergieanlage 304 veranschaulichen soll. Insoweit ist für diese Veranschaulichung nur eine Windenergieanlage 304 dargestellt, wobei in einem Windpark natürlich mehrere Windenergieanlagen vorhanden sind. Darauf wird auch noch im Zusammenhang mit Figur 5 eingegangen.

Jedenfalls ist die zentrale Parksteuerung 302 generell zum Steuern des Windparks vorgesehen, was diverse Interaktionen einschließlich Informationsaustausch mit den einzelnen Windenergieanlagen des Windparks beinhaltet. U.a. ist ein Parkblindleistungsregler 306 in dieser zentralen Parksteuerung 302 enthalten. Dieser Parkblindleistungsregler 306 erhält einen Parkblindleistungssollwert $Q_{WPS}$. Dieser kann auch mehrere Sollwerte enthalten, die z.B. für unterschiedliche Zeitfenster vorgesehen sind.

Der Parkblindleistungsregler 306 erhält dazu zusätzlich den Parkblindleistungsistwert $Q_{WPI}$. Dieser kann mehrere Werte enthalten, besonders jeweils den aktuellen Blindleistungswert, den der Windpark an das elektrische Versorgungsnetz abgibt.

Aus dem Parkblindleistungssollwert $Q_{WPS}$ und dem Parkblindleistungsistwert $Q_{WPI}$ bestimmt der Parkblindleistungsregler 306 einen Parkspannungssollwert $U_{WPS}$. Dieser Parkspannungssollwert $U_{WPS}$ kann auch als Spannungssollwert für die Windenergieanlagen verstanden werden, da er für diese Windenergieanlagen einen Sollwert vorgibt. Da dieser Parkspannungssollwert $U_{WPS}$ aber für alle Windenergieanlagen gleich ist und insoweit in jedem Windpark nur ein solcher Wert zurzeit vorhanden ist, wird er hier als Parkspannungssollwert $U_{WPS}$ bezeichnet.

Der Parkspannungssollwert $U_{WPS}$ wird dann zur Umsetzung jeweils an einen Anlagenblindleistungsregler 308 gegeben. Dieser Anlagenblindleistungsregler 308 kann somit Teil der Windenergieanlage 304 sein. Er kann auch grundsätzlich Teil einer Anlagensteuerung der Windenergieanlage 304 sein.

Jedenfalls erhält der Anlagenblindleistungsregler 308 neben dem Parkspannungssollwert $U_{WPS}$ auch einen Wert einer Anlagenspannung $U_{AI1}$, wobei der Index 1 anzeigt, dass diese Anlagenistspannung zur ersten Windenergieanlage gehört, die nämlich in Figur 3 als Windenergieanlage 308 gezeigt ist. Der Anlagenblindleistungsregler 308 bestimmt in Abhängigkeit von diesen Eingangswerten einen Anlagenblindstrom $I_{q1}$. Der Index 1 gibt lediglich an, dass dieser Anlagenblindstrom zur ersten Anlage gehört, wobei angenommen wird, dass die in Figur 3 dargestellte Windenergieanlage 308 die erste Windenergieanlage oder die Windenergieanlage 1 ist.

Als Anlagenblindleistungsregler 308 ist insbesondere ein Proportionalregler vorgesehen, sodass sich der Anlagenblindstrom $I_{q1}$ mit folgender Formel berechnet, wobei K ein Proportionalitätsfaktor ist, der als Reglerverstärkung vorgebbar ist:

$$I_{q1} = K(U_{WPS} - U_{AI1})$$

Eine Änderung der Anlagenistspannung $U_{AI1}$ wirkt sich also sofort auf den Anlagenblindstrom $I_{q1}$ aus. Ein Sprung in den Eingangsgrößen führt also auch zu einem Sprung in dem Anlagenblindstrom $I_{q1}$. Da der Anlagenblindleistungsregler 308 als P-Regler ausgebildet ist, kann er keine stationäre Genauigkeit erzielen.

Eine stationäre Genauigkeit kann aber mit dem Parkblindleistungsregler 306 erzielt werden, denn er kann als PI-Regler ausgebildet sein. Dieser PI-Regler kann dafür einen Regelfehler aus Parkblindleistungssollwert und erfasstem Parkblindleistungsistwert bilden, und darauf basierend einen modifizierten Parkblindleistungssollwert bestimmen, der somit so bestimmt wird, dass der Regelfehler möglichst ausgeregelt wird.

Hier ist der Gedanke, dass der Windpark selbst Blindleistung verbraucht, sodass von der im Park erzeugten Blindleistung weniger am Netzverknüpfungspunkt bereitgestellt werden kann. Die erfasste Parkblindleistung erreicht dann nicht die vorgegebene Parkblindleistung, es kommt zum Regelfehler. Der Regelfehler führt im PI-Regler dazu, dass der modifizierte Parkblindleistungssollwert ansteigt, bis er um eine solche Differenz über dem nicht modifizierten Parkblindleistungssollwert liegt, die der im Park verbrauchten Blindleistung entspricht.

Der PI-Regler kann in Abhängigkeit von einer Nennleistung und/oder maximalen Blindleistung begrenzt sein. Insbesondere kann er auf eine maximale Blindleistung des Windparks begrenzt sein. Die Begrenzung kann so ausgebildet sein, dass sein I-Anteil begrenzt ist, oder sie kann das beinhalten. Dadurch wird vermieden, dass der I-Anteil unbegrenzt weiter aufintegriert, wenn der Blindleistungssollwert nicht erreicht wird.

Figur 4 veranschaulicht für die Konstellation gemäß Figur 3 das dynamische Verhalten im Falle eines Spannungssprungs, hier negativ, der Anlagenistspannung $U_{AI1}$. Dazu zeigt das obere Diagramm einen zeitlichen Verlauf des Parkspannungssollwertes $U_{WPS}$ sowie den Verlauf einer Anlagenistspannung $U_{AI1}$. Zum Zeitpunkt $t_1$ wird von einem sprunghaften Abfall der Anlagenistspannung $U_{AI1}$ ausgegangen. Das kann besonders durch ein entsprechendes Netzereignis ausgelöst sein, was hier nicht weiter thematisiert wird.

Jedenfalls wird zu diesem oberen Spannungsdiagramm ein Blindleistungsdiagramm dargestellt. Dieses Blindleistungsdiagramm zeigt somit den Parkblindleistungsistwert $Q_{WPI}$. Für diesen Parkblindleistungsistwert wird angenommen, dass dieser am Ausgang des Windparks erfasst wird und es wird davon ausgegangen, dass ausgehend von Figur 3 diverse weitere Windenergieanlagen wie die Windenergieanlage 308 vorliegen, die alle auf die gleiche Art und Weise gesteuert werden und auch einen ganz gleichen P-Regler zur Erzeugung des Anlagenblindstroms aufweisen.

In dem Fall führt der Spannungseinbruch der Anlagenistspannung $U_{AI1}$, der in diesem Sinne auch bei den übrigen Windenergieanlagen angenommen wird, zu einem Sprung des Anlagenblindstroms und damit zu einem Sprung aller Anlagenblindströme und damit zu einem Sprung der Parkblindleistung, also dem Parkblindleistungsistwert.

Erst dieser sprunghafte Anstieg des Parkblindleistungsistwertes, der in dem unteren Diagramm gestrichelt eingekreist ist, führt dann dazu, dass der Parkblindleistungsregler 306 gemäß Figur 3 den Parkspannungssollwert $U_{WPS}$ anpasst. Da der Parkblindleistungsregler 306 dazu als PI-Regler ausgebildet sein kann, ergibt sich die dargestellte langsame Dynamik, mit der der Parkspannungssollwert ab dem Zeitpunkt $t_1$ mit der dargestellten Dynamik abfällt, die im oberen Diagramm gestrichelt eingekreist ist. Dies erfolgt so lange, bis sich wieder derselbe Spannungsabstand zwischen dem Parkspannungssollwert $U_{WPS}$ und der Anlagenistspannung $U_{AI1}$ wie vor dem Spannungseinbruch bei $t_1$ ergibt. Bis dahin ist dann auch entsprechend der Parkblindleistungsistwert $Q_{WPI}$ wieder auf den Wert vor dem Ereignis zum Zeitpunkt $t_1$ abgefallen.

So kann also die Parkblindleistung auf ihren Sollwert ausgeregelt werden.

Figur 5 geht von demselben Schema wie Figur 3 aus, hat zur Veranschaulichung der Aufteilung der Blindleistungserzeugung im Windpark auf die einzelnen Windenergieanlagen allerdings eine weitere Windenergieanlage 308N gezeigt. Sie steht repräsentativ dafür, dass N-Anlagen in dem Windpark vorhanden sind. Figur 5 zeigt insoweit nur schematisch quasi die erste und letzte Windenergieanlage des Windparks.

Figur 5 zeigt somit eine weitere Windenergieanlage 304N mit einem weiteren, zugehörigen Anlagenblindleistungsregler 308N. Entsprechend erhält zur Windenergieanlage 304N der Anlagenblindleistungsregler 308N den Anlagenspannungsistwert $U_{AIN}$ und bestimmt den Anlagenblindstromwert $I_{qN}$. Der Einfachheit halber werden für Figur 5 und Figur 3 dieselben Bezugszeichen verwendet und insoweit gelten die Erläuterungen zu Figur 3 auch zu Figur 5.

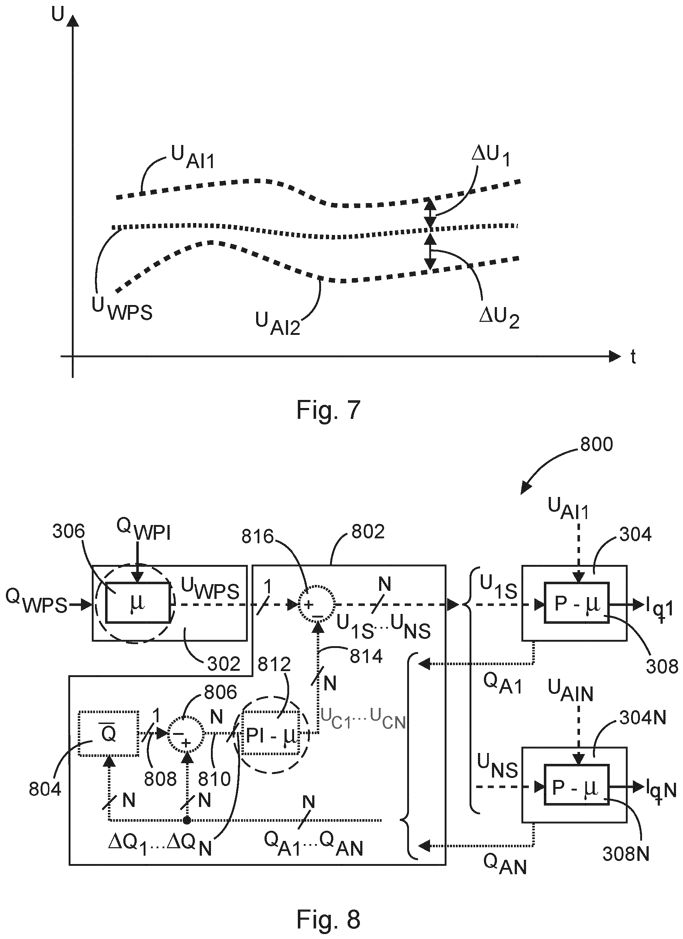

Figur 5 soll besonders veranschaulichen, dass die Windenergieanlagen 308 und 308N denselben Parkspannungssollwert $U_{WPS}$ erhalten. Daraus können die folgenden Situationen entstehen, die in den Figuren 6 und 7 erläutert werden.

Figur 6 zeigt ein Zeitdiagramm für einen Parkspannungssollwert $U_{WPS}$, wie er in den Strukturen der Figuren 3 und 5 vorgegeben wird, zusammen mit den beiden Anlagenistspannungen $U_{AI1}$ und $U_{AI2}$. Beide Anlagenistspannungen $U_{AI1}$ und $U_{AI2}$ sind die Anlagenistspannungen zweier repräsentativer Windenergieanlagen. Im einfachsten Fall kann zur Veranschaulichung angenommen werden, dass dies den beiden Windenergieanlagen 304 und 304N der Figur 5 entspricht.

Das Diagramm der Figur 6 veranschaulicht somit, dass unterschiedliche Anlagenistspannungen $U_{AI1}$ bzw. $U_{AI2}$ zu unterschiedlichen Differenzspannungen $\Delta U_1$ und $\Delta U_2$ und damit bei gleich parametrierten Anlagenblindleistungsreglern zu entsprechend unterschiedlichen Blindleistungen führen, die jeweils von der betreffenden Windenergieanlage zu erzeugen ist. Es ergibt sich also eine Ungleichverteilung der von den einzelnen Windenergieanlagen zu erzeugenden Blindleistungen.

Dabei können die unterschiedlichen Spannungshöhen der beispielhaft genannten Anlagenistspannungen $U_{AI1}$ und $U_{AI2}$ bspw. durch unterschiedliche Leitungsimpedanzen zwischen der betreffenden Windenergieanlage und einem gemeinsamen Netzanschlusspunkt des Windparks hervorgerufen sein. Die unterschiedlichen Leitungsimpedanzen können sich aus unterschiedlichen Abständen der jeweiligen Windenergieanlagen von diesem gemeinsamen Netzanschlusspunkt ergeben.

Figur 7 zeigt im Grunde das gleiche Diagramm wie Figur 6, sodass auch dieselben Bezeichnungen verwendet werden. Das Diagramm der Figur 7 veranschaulicht einen Fall, bei dem der Parkspannungssollwert $U_{WPS}$ zwischen den beiden Anlagenistspannungen $U_{AI1}$ bzw. $U_{AI2}$ liegt. Das führt dann bei einer Steuerung gemäß Figur 5 dazu, dass an der einen Windenergieanlage eine negative und an der anderen eine positive Spannungsdifferenz $\Delta U_1$ bzw. $\Delta U_2$ auftritt, sodass die eine Windenergieanlage - vereinfacht ausgedrückt - negative Blindleistung und die andere positive Blindleistung beisteuert, also eine kapazitive Blindleistung und eine induktive Blindleistung. Die beiden Windenergieanlagen arbeiten also quasi gegeneinander.

Effizienter wäre es in diesem beispielhaften vereinfachten Fall, wenn beide Windenergieanlagen (fast) in der gezeigten Situation gar keine Blindleistung erzeugen würden, statt, dass beide Windenergieanlagen Blindleistung gleicher oder ähnlicher Höhe nur mit unterschiedlichem Vorzeichen erzeugen. Durch die vorgeschlagene Lösung, den Anlagenspannungssollwert anzupassen, insbesondere durch den Spannungskorrekturwert, kann eine solche Situation vermieden werden, zumindest verringert werden. Das gilt auch für die in Figur 6 beschriebene Situation.

Figur 8 zeigt schematisch eine Parkblindleistungssteuerung 800 mit einer vorgeschlagenen Steuerungsstruktur zum Aufteilen, insbesondere Vergleichmäßigen oder Symmetrieren der einzelnen Anlagenblindleistungen.

Ein Vorteil der in Figur 8 gezeigten Lösung besteht darin, dass eine Modifizierungssteuerstruktur 802 ergänzt wird, die ansonsten auf bekannten Strukturen, Reglern und Steuerungen aufsetzt.

Insbesondere kann eine zentrale Parksteuerung 302 mit einem Parkblindleistungsregler 306 unverändert weiterverwendet werden, wie in den Figuren 3 und 5 dargestellt. Entsprechend werden hier, selbst wenn Unterschiede vorhanden sein können, dieselben Bezugszeichen verwendet. Auch die Windenergieanlagen 304 und 304N mit dem Anlagenblindleistungsregler 308 bzw. 308N können denen der Figuren 3 bzw. 5 entsprechen. Insoweit werden auch für die Windenergieanlagen 304 und 304N dieselben Bezugszeichen wie in Figur 3 bzw. Figur 5 verwendet, selbst wenn Unterschiede vorhanden sein sollten.

Ein Unterschied ist dabei in Figur 8 dargestellt, demnach jede Windenergieanlage 304 bzw. 304N eine Anlagenblindleistung $Q_{A1}$ bzw. $Q_{AN}$ als Signal zur Verwendung in der Modifizierungssteuerstruktur 802 abgeben. Die beiden Anlagenblindleistungen $Q_{A1}$ und $Q_{AN}$ sind insoweit nur repräsentativ für N, also mehrere Anlagenblindleistungen von N, also mehrere Windenergieanlagen. Mit anderen Worten ist zur Veranschaulichung nur die erste und N-te Windenergieanlage dargestellte.

Diese N Anlagenblindleistungen $Q_{A1}$ bis $Q_{AN}$ werden dann an die Modifizierungssteuerstruktur 802 übergeben und sind dann in einem N-gestrichenen Signalpfad zusammengefasst. Alle Signalpfade, die mit N gekennzeichnet sind, stehen somit repräsentativ für N einzelne Signalpfade. Entsprechende Regler oder andere funktionale Elemente, die mit einem solchen N-Signalpfad zusammenwirken, können ebenfalls als N-Elemente betrachtet werden.

Jedenfalls ist vorgesehen, dass von diesen N Anlagenblindleistungen $Q_{A1}$ bis $Q_{AN}$ in dem Mittelwertblock 804 ein Mittelwert gebildet wird und an die erste Summierstelle 806 übertragen wird.

An der ersten Summierstelle 806 wird für jede der N Anlagenblindleistungen $Q_{A1}$ bis $Q_{AN}$ eine Differenz gebildet, bei der jeweils der erzeugte Blindleistungsmittelwert 808 von jeder Anlagenblindleistung $Q_{A1}$ bis $Q_{AN}$ abgezogen wird. Insoweit steht die erste Summierstelle 806 tatsächlich für N einzelne Summierstellen. Jedenfalls ist das Ergebnis eine Mittelwertdifferenz $\Delta Q_1$ bis $\Delta Q_N$. Diese N Blindleistungsmittelwertdifferenzen sind somit in dem Mittelwertdifferenzpfad 810 zusammengefasst und werden an einen Spannungskorrekturregler 812 gegeben. Der Spannungskorrekturregler 812 steht somit auch repräsentativ für N Regler, denn jede der N Mittelwertdifferenzen, die über den Mittelwertdifferenzpfad 810 zugeführt werden, werden jeweils einem einzelnen Regler zugeführt. Gleichwohl sind diese N Regler des Spannungskorrekturreglers 812 in Aufbau und Parametrierung gleich.

Jeder Regler des Spannungskorrekturreglers 812 ist hier als PI-Regler aufgebaut, der vorzugsweise eine Begrenzung des Integralteils aufweisen kann.

Das Ergebnis des Spannungskorrekturreglers 812 sind N Spannungskorrekturwerte $U_{C1}$ bis $U_{CN}$. Diese N Spannungskorrekturwerte werden über den Spannungskorrekturpfad 814 an die zweite Summierstelle 816 gegeben.

Die zweite Summierstelle 816 besteht ebenfalls aus N einzelnen Summierstellen. In jeder Summierstelle wird jeweils von dem Parkspannungssollwert $U_{WPS}$ jeweils einer der Spannungskorrekturwerte $U_{C1}$ bis $U_{CN}$ abgezogen. Das Ergebnis ist somit N individuelle Anlagenspannungssollwerte $U_{1S}$ bis $U_{NS}$, die dann entsprechend jeweils an die Windenergieanlagen 304 bis 304N bzw. die Anlagenblindleistungsregler 308 bis 308N gegeben werden.

Dadurch erhält jede Windenergieanlage ihren individuellen Anlagenspannungssollwert. Die einzelnen Windenergieanlagen können dadurch wie bisher betrieben werden und wie bisher einen Blindstrom in Abhängigkeit von einem Anlagenspannungssollwert bestimmen. Lediglich wurde der Anlagenspannungssollwert, der bisher für alle Windenergieanlagen identisch war, individualisiert. Das erfolgte dadurch, dass mittels der Modifizierungssteuerstruktur 802 der Anlagenspannungssollwert $U_{WPS}$ in individuelle Anlagenspannungssollwerte aufgeteilt wurde.

Die Aufteilung erfolgt so, dass jeweils berücksichtigt wird, wieviel Blindleistung jede einzelne Windenergieanlage erzeugt. Dieser Wert wird an der ersten Summierstelle 806 zum Blindleistungsmittelwert aller Anlagenblindleistungen ins Verhältnis gesetzt und vereinfachend ausgedrückt wird die Differenz zum Blindleistungsmittelwert jeweils ausgeregelt. Dafür bestimmt die erste Summierstelle quasi für jede Windenergieanlage eine Regelabweichung der jeweiligen Anlagenblindleistung, denn der Blindleistungsmittelwert kann veranschaulichend auch als Blindleistungssollwert für jede Windenergieanlage verstanden werden.

Das Ausregeln erfolgt durch den Spannungskorrekturregler 812, der für jede Windenergieanlage einen Spannungskorrekturwert $U_{C1}$ bis $U_{CN}$ ausgibt, der im Grunde als Stellgröße verstanden werden kann.

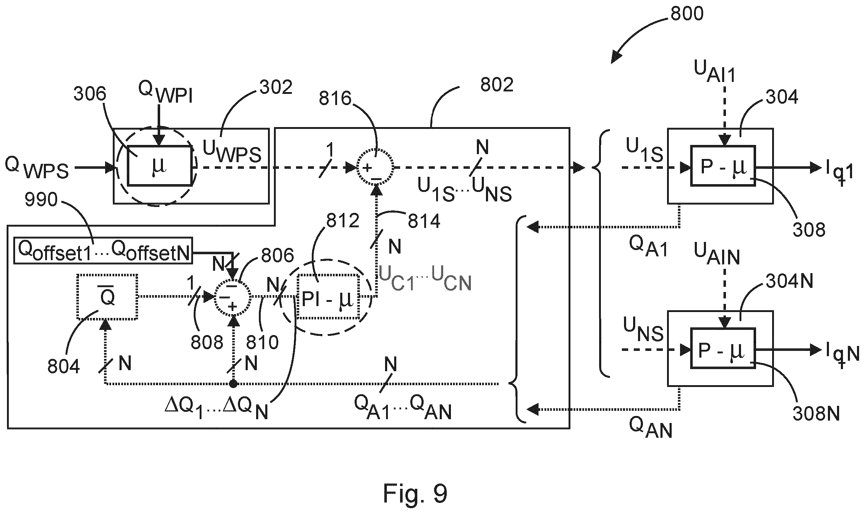

Figur 9 zeigt schematisch eine Parkblindleistungssteuerung 800 mit einer vorgeschlagenen Steuerungsstruktur zum Aufteilen, insbesondere Vergleichmäßigen oder Symmetrieren der einzelnen Anlagenblindleistungen. Die Figur ist ähnlich der Figur 8 und daher werden der besseren Übersichtlichkeit halber dieselben Bezugszeichen aus Figur 8 auch in Figur 9 übernommen.

Im Wesentlichen ist zu der Parkblindleistungssteuerung 800 ein Anlagenoffset-Block 990 hinzugekommen, der Anlagenoffsets $Q_{offset1}$ bis $Q_{offsetN}$ an der ersten Summierstelle 806 abziehen kann. Dadurch werden individuelle Anlagenoffsets jeweils von der entsprechenden Mittelwertdifferenz $\Delta Q_1$ bis $\Delta Q_N$ abgezogen, bzw. führt zu entsprechend veränderten Mittelwertdifferenzen $\Delta Q_1$ bis $\Delta Q_N$.

Es wird also vorgeschlagen, durch das Aufsummieren eines Satzes von Offset-Werten, also individuellen Anlagenoffsets $Q_{offset1}$ bis $Q_{offsetN}$, wie es in der Figur 9 durch den Anlagenoffset-Block 990 dargestellt ist, die Aufteilung der Parkblindleistungssollwerte zwischen den Windenergieanlagen zu weiteren Optimierungszwecken zu beeinflussen

Besonders können mit der vorgeschlagenen Lösung, ggf. mit einer weiteren Modifikation, die folgenden Szenarien gelöst werden.

Gemäß einem Szenario werden Mischparks, also Windparks mit unterschiedlichen Windenergieanlagentypen und/oder Windparks mit eingeschränkten Windenergieanlagen betrachtet. Es geht also um Windenergieanlagen, die insbesondere temporär weniger Leistung erzeugen als sie könnten, z. B. weil sie jeweils im Nachlauf einer anderen Windenergieanlage stehen.

Für solche Windparks ergibt sich folgende Problemstellung.

Wenn die an die Modifizierungssteuerstruktur (802 gemäß Fig. 8) zurückgemeldeten Werte der Ist-Blindleistung, also der Anlagenblindleistung bzw. Anlagenistblindleistung $Q_{A1}$ ... $Q_{AN}$ in absoluten physikalischen Einheiten (var oder in Mvar) gemäß Fig. 8 verwendet werden, ergeben sich gleiche Blindleistungen (in var oder in Mvar) für alle Windenergieanlagen, die vereinfachend und synonym auch als WEA bezeichnet werden können. Dieser Sachverhalt ist in Mischparks mit unterschiedlichen WEA-Typen nicht optimal, da die WEA über unterschiedliche Nennblindleistungen verfügen können. Gleiche absolute Blindleistungen (in var oder Mvar) für alle WEA können zum Beispiel dazu führen, dass eine WEA ihre Nennblindleistung erreicht, während eine andere WEA mit einer größeren Blindleistung ihre Nennblindleistung noch nicht erreicht hat und daher noch nicht komplett ausgelastet ist.

Folgende Lösung wird vorgeschlagen:

Die zurückgemeldeten Werte der Ist-Blindleistung also der Anlagenblindleistung bzw. Anlagenistblindleistung $Q_{A1}$ ... $Q_{AN}$ werden als Prozentsatz der Nennblindleistung der jeweiligen WEA zurückgemeldet werden. Alternativ kann diese Umrechnung in der Parksteuereinrichtung, die auch als FCU bezeichnet wird, stattfinden. Somit ergeben sich in der dargestellten Struktur (Fig. 8) gleiche Blindleistungen in Prozentsatz der Nennblindleistung für alle WEA.

Anmerkung zu Windparks, die vereinfachend und synonym auch als Parks bezeichnet werden können, mit eingeschränkten WEA:

Der oben zu Mischparks erwähnte Sachverhalt kann auch bei Parks mit einem einheitlichen WEA-Typ vorkommen, wenn eine oder einige der WEAs aus einem technischen oder anderen Grund eingeschränkt arbeiten dürfen. Ein Beispiel hierfür ist, wenn ein Leistungsschrank in einer WEA defekt ist und die entsprechende WEA nach der Deaktivierung des betroffenen Leistungsschranks mit eingeschränktem Wirk- und Blindleistungsbereich weiterarbeiten kann. Auch in diesem Fall sind gleiche absolute Blindleistungen (in var oder in Mvar) für alle WEA nicht zielführend. Um dieses Problem zu lösen, sollen die zurückgemeldeten Werte der Ist-Blindleistung also der Anlagenblindleistung bzw. Anlagenistblindleistung $Q_{A1}$ ... $Q_{AN}$ in Prozentsatz der maximal verfügbaren Blindleistung der jeweiligen WEA umgerechnet werden.

Gemäß einem weiteren Szenario wird eine Limitierung der symmetrisierenden Blindleistungsunterschiede betrachtet.

Dazu ergibt sich folgende Problemstellung:

Falls eine Limitierung für die Symmetrisierung der WEA-Blindleistungen erwünscht ist, sollten die Ausgänge des Spannungskorrekturreglers 812 (s. Fig.8) begrenzt werden. Die einfachste Möglichkeit wäre, eine Limiter-Funktion ($\pm \Delta Q_{limit}$) für die Ausgänge des Spannungskorrekturreglers 812 zu verwenden. Das könnte aber in vielen Fällen dazu führen, dass der Mittelwert der Ausgänge des Spannungskorrekturreglers 812 nicht mehr dem Wert Null entspricht. Es sei darauf hingewiesen, dass der Mittelwert der Ausgänge des Spannungskorrekturreglers 812 zu jedem Zeitpunkt dem Wert Null entsprechen sollte. Ansonsten würde der einheitliche Sollwert $U_{WPS}$ durch die Symmetrisierung der WEA-Blindleistungen verfälscht werden.

Als Lösung wird das Folgende vorgeschlagen.

Als mögliche Lösung für die oben erwähnte Problemstellung wird folgende Modifikation an den Ausgängen des Spannungskorrekturreglers 812 vorgeschlagen, die oben schon erwähnt wurde und hier in anderen Worten durch die folgenden Schritte wiedergegeben wird.

1) Ermittle jeweils den Absolutwert für die Ausgänge des Spannungskorrekturreglers 812, also für den jeweiligen Spannungswert, der an dem Ausgang ausgegeben wird, den Absolutwert. Es ergeben sich also bei N Windenergieanlagen N Absolutwerte.

2) Von diesen Absolutwerten, also den N Absolutwerten wird der größte ausgewählt. Der kann als dem Betrage nach größter Spannungskorrekturwert angesehen werden. Diesem größten Absolutwert, der ein Spannungswert ist, wird ein zugehöriger Blindleistungswert $\Delta Q_{max}$ zugeordnet. Dieser Wert $\Delta Q_{max}$ bezeichnet die Differenzblindleistung, die aus dem größten Spannungskorrekturwert resultieren würde, würde sie an den entsprechenden proportionalen Regler der entsprechenden Windenergieanlage weitergegeben werden.

3) Vergleiche $\Delta Q_{max}$ mit $\Delta Q_{limit}$, wobei $\Delta Q_{limit}$ die

maximale Blindleistungsabweichung bezeichnet, die als Begrenzung vorgesehen ist.

4) (a) wenn $\Delta Q_{max}$ kleiner oder gleich $\Delta Q_{limit}$ ist, dann reiche die Ausgänge des Blindleistungsreglers 308 ohne Modifikation weiter.

5) (b) wenn $\Delta Q_{max}$ größer als $\Delta Q_{limit}$ ist, dann multipliziere alle Ausgänge des Blindleistungsreglers 308 mit einem Faktor von $\Delta Q_{limit} / \Delta Q_{max}$ und reiche die Ergebnisse weiter.

Durch die oben erwähnte Modifikation werden die Ausgänge des Blindleistungsreglers 308, die als symmetrisierende Blindleistungsunterschiede bezeichnet werden können, auf einen Maximalwert von $\Delta Q_{limit}$ limitiert, während ihr Mittelwert zu jedem Zeitpunkt dem Wert Null entspricht.

Gemäß einem Szenario werden mögliche Probleme einer Koordination zwischen Windenergieanlagen und einer zentralen Parksteuerung während einer FRT-Störung betrachtet.

Es ergibt sich folgende Problemstellung: Sinkt die Spannung am Netzanschlusspunkt, der vereinfachend und synonym auch als NAP bezeichnet werden kann, einer WEA infolge von einem Kurzschluss im Netz (innerhalb oder außerhalb des Windparks) unter eine vordefinierte Grenze, wechselt die WEA ihren Arbeitsmodus und geht von dem Normalbetriebsmodus in den FRT-Modus, der synonym auch als Alternativverfahren oder vereinfachtes Alternativverfahren bezeichnetwerden kann.

In verschiedenen Ländern sind unterschiedliche Verhaltensstrategien, die nachfolgend als Fehlerstrategien bezeichnet werden, für diesen FRT-Modus bzw. das Alternativverfahren vorgeschrieben. In den meisten Fehlerstrategien soll dem externen Sollwert, also dem vorgegebenen Blindleistungssollwert und damit dem daraus resultierenden Parkspannungssollwert der zentralen Parksteuerung, nicht mehr gefolgt werden. Stattdessen sollen anhand von einer vordefinierten Gleichung Blindströme in Abhängigkeit der Ist-Spannung eingespeist werden.

Da dem Sollwert der FCU in dem FRT-Modus nicht mehr gefolgt werden kann, besteht in so einem Fall die Gefahr, dass der übergeordnete Parkblindleistungsregler, der auch als FCU-Regler bezeichnet werden kann, gegen diese konzeptgemäße Abweichung regelt. Dadurch entstehen gegenläufige Regeleffekte auf der FCU- und WEA-Ebene, die nicht zielführend sind. Der Sachverhalt wird etwas komplizierter, wenn der Spannungseinbruch nah an der vordefinierten Grenze für eine Aktivierung des FRT-Modus liegt. Durch kleine Unterschiede zwischen der Spannung am NAP und der Spannung an der jeweiligen WEA können einige der WEA in den FRT-Modus gehen, während sich die anderen Windenergieanlagen im Normalbetrieb befinden. In so einem Fall soll die FCU die beiden Gruppen der WEA (die im Normalbetriebsmodus und die im FRT-Modus) bedienen könnten.

Dazu wird folgende Lösung vorgeschlagen: Als Lösung für die oben erwähnte Problemstellung wird Folgendes vorgeschlagen: Sobald sich eine WEA in dem FRT-Modus befindet, wird der Modus-Wechsel an die FCU zurückgemeldet. Nun sind basierend auf der Tiefe des Spannungseinbruches zwei Fälle möglich:

Fall 1) Der Spannungseinbruch ist so tief, dass die Spannung an allen WEA den Grenzwert für den Eintritt in den FRT-Modus unterschreitet. Somit gehen alle durch die FCU geregelten WEA in den FRT-Modus und stellen meist unabhängig vom FCU-Blindleistungssollwert einen gewissen Blindstrom, der durch die aktivierte Fehlerstrategie bestimmt wird. Die FCU erhält die Information, dass sich alle WEA in FRT-Modus befinden. Um gegenläufige Regeleffekte auf der FCU- und WEA-Ebene zu vermeiden, wäre es möglich, infolge dieser Informationsrückmeldung den U-Sollwert und etwaige Integral-Reglerwerte in der FCU einzufrieren und diese erst nach der Rückkehr aller WEA zum Normalbetriebsmodus wieder zu aktivieren.

Fall 2) Der Spannungseinbruch ist so tief, dass die Spannung an einer oder mehreren WEA den Grenzwert für den Eintritt in den FRT-Modus unterschreiten, während sie an wenigstens einer WEA weiterhin oberhalb dieses Grenzwerts bleibt. Für diesen Fall werden folgende Vorgehensweisen als Alternativen vorgeschlagen

Variante 1: Der U-Sollwert und etwaige Integral-Reglerwerte in der FCU sind ähnlich wie bei Fall 1) einzufrieren. Demzufolge ist keine Sollwertänderung während der FRT-Störung möglich, auch wenn die WEA im Normalbetrieb zur Realisierung dieses Sollwerts beitragen könnten.

Variante 2: Bei dieser Variante werden die WEA, die sich nicht in dem FRT-Modus befinden, die Realisierung einer Sollwertänderung in einem eingeschränkten Umfang ermöglichen. Diese kann folgendermaßen erreicht werden:
Die zurückgemeldete Ist-Blindleistung der in dem FRT-Modus befindlichen WEA wird von der gemessenen Ist-Blindleistung, die besonders am NAP vom Windpark erfasst wird, abgezogen. Somit wird die Ist-Blindleistung am NAP vom Windpark, die am Eingang für den FCU-Regler anliegt bzw. dort eingegeben wird, um die Blindleistung der WEA, die aufgrund des FRT-Modus nicht regelbar sind, "bereinigt", die Summe der nicht regelbaren Blindleistungen wird somit abgezogen.

Andererseits wird der Blindleistungssollwert, der am Eingang für den FCU-Regler anliegt bzw. dort eingegeben wird, mit dem folgenden Faktor $k_Q$ multipliziert:

$$k_Q = (Q_{nennWP} - Q_{nennFRT})/Q_{nennWP}$$

wobei

$Q_{nennWP}$: Nennblindleistung des Windparks

$Q_{nennFRT}$: Blindleistungsanteil der in dem FRT-Modus befindlichen WEA an der Nennblindleistung des Windparks

Somit wird der Blindleistungssollwert an den Anteil der im Normalbetriebsmodus befindlichen WEA angepasst.

Nun kann die FCU-Regler mit den "bereinigten" Soll- und Istwerten die sich in dem Normalbetriebsmodus befindlichen WEA regeln, während sich die anderen WEA in dem FRT-Modus befinden.

Anmerkung: Die Variante 2 ist oben beispielhaft für einen Q-Regler auf der FCU-Ebene erklärt worden. Sie kann aber mit ähnlichen Überlegungen auf andere FCU-Regler-Typen angewendet werden, z.B. einen Phi-Regler, der in Abhängigkeit einer Spannungsabweichung einen Phasenwinkel vorgibt.

Figuren 3 bis 9 haben Teile der Erfindung basierend auf einer Konstellation erläutert, bei der eine Parkvorgabe als Parkblindleistungssollwert vorgegeben wird, bei der ein Parksteuersollwert als Parkspannungssollwert bestimmt wird, und bei der die individuellen Anlagensteuerwerte als individuelle Anlagensteuersollwerte bestimmt werden.

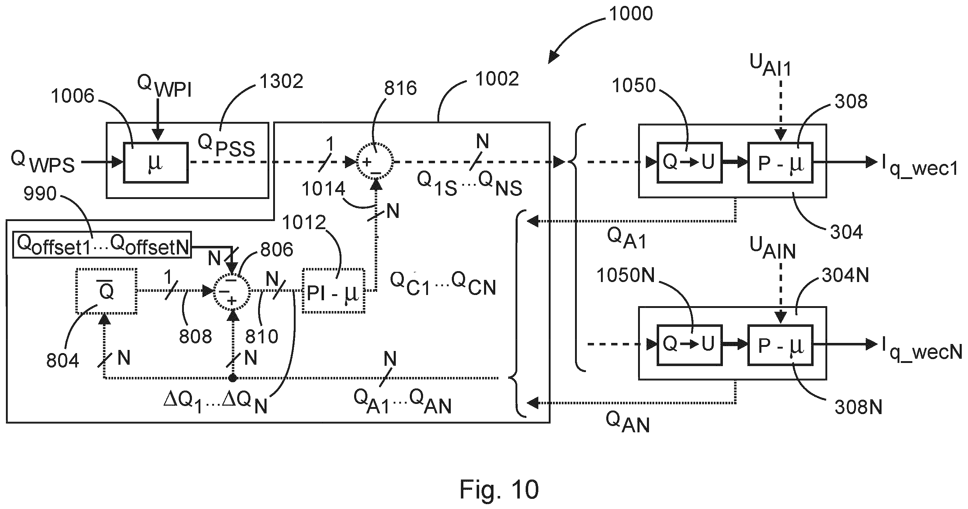

In der folgenden Figur 10 werden Teile der Erfindung basierend auf einer Konstellation erläutert, bei der der Parkvorgabewert als Parkblindleistungssollwert vorgegeben wird, der Parksteuersollwert als Parkblindleistungssteuersollwert zum Vorgeben einer Blindleistung als gemeinsamen Vorgabewert für alle Windenergieanlagen bestimmt wird, und die individuellen Anlagensteuersollwerte als Anlagenblindleistungssollwerte bestimmt werden.

Diese Konstellation sieht besonders vor, dass das Bestimmen der individuellen Anlagensteuerwerte auf Blindleistungsebene erfolgt. Mit anderen Worten ist der Parksteuersollwert eine Blindleistung, die dann in die individuellen Anlagensteuerwerte modifiziert wird, die ihrerseits auch noch Blindleistungswerte sind. Erst danach erfolgt, besonders in jeder Windenergieanlage, die Überführung von Blindleistung in Spannung. Erst in dem Schritt erfolgt also das Bestimmen der individuellen Anlagenspannungssollwerte. Das Bestimmen der Anlagenblindleistungen bzw. Anlagenblindströme basierend auf den individuellen Anlagenspannungssollwerten kann dann in beiden Konstellationen gleich sein.

Figur 10 zeigt schematisch eine Parkblindleistungssteuerung 1000 mit einer vorgeschlagenen Steuerungsstruktur zum Aufteilen, insbesondere Vergleichmäßigen oder Symmetrieren der einzelnen Anlagenblindleistungen.

Ein Vorteil der in Figur 10 gezeigten Lösung besteht darin, dass eine Modifizierungssteuerstruktur 1002 vorgesehen wird, die ansonsten auf bekannten Strukturen, Reglern und Steuerungen aufsetzt und der Modifizierungssteuerstruktur 802 der Figur 8 sehr ähnlich ist.

Insbesondere kann eine zentrale Parksteuerung 1302 mit einem Parkblindleistungsregler 1006 im Wesentlichen unverändert weiterverwendet werden, wie in den Figuren 3 und 5 dargestellt, wobei hier abweichend die zentrale Parksteuerung 1302 mit dem Parkblindleistungsregler 1006 einen als Parksteuerwert einen Parkblindleistungssteuersollwert $Q_{PSS}$ ausgibt. Der Parkblindleistungssteuersollwert $Q_{PSS}$ ist also eine Blindleistung und ist zunächst als Blindleistungssollwert für alle Windenergieanlagen vorgesehen. Er ist also der Größe nach geringer als der Parkblindleistungssollwert $Q_{WPS}$, kann bspw. 1/10 davon sein, wenn der Windpark 10 Windenergieanlagen aufweist.

Es ist aber auch möglich, den Parkblindleistungssollwert prozentual vorzugeben. Wenn bspw. 50% der Nennblindleistung des Windparks eingespeist werden sollen, so kann der Parkblindleistungssollwert 50% betragen, der Parkblindleistungssteuersollwert, der im Grunde für die Einzelanlagen vorgesehen ist, kann dann auch 50% betragen. Für den Parkblindleistungssteuersollwert ist die prozentuale Angabe aber relativ zur Nennblindleistung jeder einzelnen Windenergieanlage zu verstehen. Im Beispiel würden 50% als Parkblindleistungssteuersollwert bedeuten, dass zunächst, also bevor die vorgeschlagene Bestimmung der individuellen Anlagensteuersollwerte insbesondere der individuellen Anlagenblindleistungssollwerte erfolgt, alle Anlagen 50% ihrer Nennblindleistung einspeisen. Das kann dann an den Windenergieanlagen zu unterschiedlichen absoluten Werten führen, wenn die Windenergieanlagen unterschiedliche Nennblindleistungen haben. Sowohl für den Park als auch für die einzelnen Windenergieanlagen kann auch statt der Nennblindleistung eine Nennwirkleistung als Bezug genommen werden.

Ansonsten werden hier teilweise, selbst wenn Unterschiede vorhanden sein können, dieselben Bezugszeichen wie in vorigen Figuren verwendet. Besonders die Windenergieanlagen 304 und 304N mit dem Anlagenblindleistungsregler 308 bzw. 308N können denen der Figuren 3 bzw. 5 entsprechen. Insoweit werden auch für die Windenergieanlagen 304 und 304N dieselben Bezugszeichen wie in Figur 3 bzw. Figur 5 verwendet, selbst wenn Unterschiede vorhanden sein sollten.

Ein Unterschied ist dabei in Figur 10 dargestellt, demnach die Windenergieanlagen 308 bis 308N nicht die N individuelle Anlagenspannungssollwerte $U_{1S}$ bis $U_{NS}$ als Eingangsgröße erhalten, sondern aus dem jeweiligen Anlagenblindleistungssollwert $Q_{1S}$ bis $Q_{NS}$ bestimmen, nämlich durch den Q-U-Übertragungsblock 1050, der repräsentativ für die Steuerwertübertragungsfunktion steht, bzw. in dem die Steuerwertübertragungsfunktion implementiert sein kann.

Ein weiterer Unterschied ist dabei in Figur 10 gegenüber den Figuren 3 und 5, dass jede Windenergieanlage 304 bzw. 304N eine Anlagenblindleistung $Q_{A1}$ bzw. $Q_{AN}$ als Signal zur Verwendung in der Modifizierungssteuerstruktur 1002 abgibt. Die beiden Anlagenblindleistungen $Q_{A1}$ und $Q_{AN}$ sind insoweit nur repräsentativ für N, also mehrere Anlagenblindleistungen von N, also mehrere Windenergieanlagen. Mit anderen Worten ist zur Veranschaulichung nur die erste und N-te Windenergieanlage dargestellt.

Diese N Anlagenblindleistungen $Q_{A1}$ bis $Q_{AN}$ werden dann an die Modifizierungssteuerstruktur 1002 übergeben, die der Modifizierungssteuerstruktur 802 der Figur 8 entsprechen kann, sodass dasselbe Bezugszeichen verwendet wird. Die N Anlagenblindleistungen $Q_{A1}$ bis $Q_{AN}$ sind dann in einem N-gestrichenen Signalpfad zusammengefasst. Alle Signalpfade, die mit N gekennzeichnet sind, stehen somit auch hier repräsentativ für N einzelne Signalpfade. Entsprechende Regler oder andere funktionale Elemente, die mit einem solchen N-Signalpfad zusammenwirken, können ebenfalls als N-Elemente betrachtet werden.

Jedenfalls ist vorgesehen, dass von diesen N Anlagenblindleistungen $Q_{A1}$ bis $Q_{AN}$ in dem Mittelwertblock 804, der dem in Figur 8 entsprechen kann, ein Mittelwert gebildet wird und an die erste Summierstelle 806, die auch der in Figur 8 entsprechen kann, übertragen wird.

An der ersten Summierstelle 806 wird für jede der N Anlagenblindleistungen $Q_{A1}$ bis. $Q_{AN}$ eine Differenz gebildet, bei der jeweils der erzeugte Blindleistungsmittelwert 808 von jeder Anlagenblindleistung $Q_{A1}$ bis $Q_{AN}$ abgezogen wird. Insoweit steht die erste Summierstelle 806 tatsächlich für N einzelne Summierstellen. Jedenfalls ist das Ergebnis eine Mittelwertdifferenz $\Delta Q_1$ bis $\Delta Q_N$, wie auch in Figur 8. Diese N Blindleistungsmittelwertdifferenzen sind somit in dem Mittelwertdifferenzpfad 810, ebenfalls wie in Figur 8, zusammengefasst und werden an einen Blindleistungskorrekturregler 1012 gegeben. Der Blindleistungskorrekturregler entspricht dem Spannungskorrekturregler 812 der Figur 8 dem Grunde nach, gibt aber jeweils einen Blindleistungswert aus. Der Blindleistungskorrekturregler 1012 steht somit auch repräsentativ für N Regler, die in ihm zusammengefasst sind, denn jede der N Mittelwertdifferenzen, die über den Mittelwertdifferenzpfad 810 zugeführt werden, wird jeweils einem einzelnen Regler zugeführt. Gleichwohl sind diese N Regler des Blindleistungskorrekturreglers 1012 in Aufbau und Parametrierung gleich, nur ihre Ein- und Ausgangswerte können sich unterscheiden.

Jeder Regler des Blindleistungskorrekturreglers 1012 ist hier als PI-Regler aufgebaut, der vorzugsweise eine Begrenzung des Integralteils aufweisen kann.

Das Ergebnis des Spannungskorrekturreglers 812 der Figur 8 sind N Spannungskorrekturwerte $U_{C1}$ bis $U_{CN}$. Das Ergebnis des Blindleistungskorrekturreglers 1012 der hier beschriebenen Figur 10 sind N Blindleistungskorrekturwerte $Q_{C1}$ bis $Q_{CN}$. Diese N Blindleistungskorrekturwerte werden über den Blindleistungskorrekturpfad 1014 an die zweite Summierstelle 816 gegeben, die zwar auf die Berechnung von Blindleistungen angewendet wird, ansonsten aber der Summierstelle 816 in Figur 8 entspricht und daher das Bezugszeichen beibehalten wurde.

Die zweite Summierstelle 816 besteht ebenfalls aus N einzelnen Summierstellen. In jeder Summierstelle wird jeweils von dem Parkblindleistungssteuersollwert $Q_{PSS}$ jeweils einer der N Blindleistungskorrekturwerte $Q_{C1}$ bis $Q_{CN}$ abgezogen. Das Ergebnis ist somit N individuelle Anlagenblindleistungssollwerte $Q_{1S}$ bis $Q_{NS}$, die dann entsprechend jeweils an die Windenergieanlagen 304 bis 304N bzw. die Anlagenblindleistungsregler 308 bis 308N gegeben werden.

Die Anlagenblindleistungssollwerte $Q_{1S}$ bis $Q_{NS}$ werden dann jeweils in einen individuellen Anlagenspannungssollwert überführt, nämlich durch den Q-U-Übertragungsblock 1050 bzw. 1050N. Dadurch erhält jede Windenergieanlage ihren individuellen Anlagenspannungssollwert. Die einzelnen Windenergieanlagen können dadurch wie bisher betrieben werden und wie bisher einen Blindstrom in Abhängigkeit von einem Anlagenspannungssollwert bestimmen. Lediglich wurde der Anlagenspannungssollwert, der bisher für alle Windenergieanlagen identisch war, individualisiert. Das erfolgte dadurch, dass mittels der Modifizierungssteuerstruktur 1002 der Parkblindleistungssteuersollwert $Q_{PSS}$ in individuelle Anlagenblindleistungssollwerte $Q_{1S}$ bis $Q_{NS}$ aufgeteilt wurde, die schließlich in die Anlagenspannungssollwerte überführt wurden.

Die Aufteilung erfolgt so, dass jeweils berücksichtigt wird, wieviel Blindleistung jede einzelne Windenergieanlage erzeugt. Dieser Wert wird an der ersten Summierstelle 806 zum Blindleistungsmittelwert aller Anlagenblindleistungen ins Verhältnis gesetzt und vereinfachend ausgedrückt wird die Differenz zum Blindleistungsmittelwert jeweils ausgeregelt. Dafür bestimmt die erste Summierstelle quasi für jede Windenergieanlage eine Regelabweichung der jeweiligen Anlagenblindleistung, denn der Blindleistungsmittelwert kann veranschaulichend auch als Blindleistungssollwert für jede Windenergieanlage verstanden werden.

Das Ausregeln erfolgt durch den Blindleistungskorrekturregler 1012, der für jede Windenergieanlage einen Blindleistungskorrekturwert $Q_{C1}$ bis $Q_{CN}$ ausgibt, der im Grunde als Stellgröße verstanden werden kann.

Figur 10 zeigt zudem in der Parkblindleistungssteuerung 1000 einen Anlagenoffset-Block 990, der Anlagenoffsets $Q_{offset1}$ bis $Q_{offsetN}$ an der ersten Summierstelle 806 abziehen kann. Das Bezugszeichen aus Figur 9 wird hier beibehalten, denn der Anlagenoffset-Block 990 kann dem in Figur 9 entsprechen, der nämlich von Figur 8 zu Figur 9 hinzugekommen ist. Auch hier können durch den Anlagenoffset-Block 990 individuelle Anlagenoffsets jeweils von der entsprechenden Mittelwertdifferenz $\Delta Q_1$ bis $\Delta Q_N$ abgezogen werden, bzw. die Anwendung des Anlagenoffset-Blocks 990 führt zu entsprechend veränderten Mittelwertdifferenzen $\Delta Q_1$ bis $\Delta Q_N$.

Es wird also vorgeschlagen, durch das Aufsummieren eines Satzes von Offset-Werten, also individuellen Anlagenoffsets $Q_{offset1}$ bis $Q_{offsetN}$, wie es in den Figuren 9 und 10 durch den Anlagenoffset-Block 990 dargestellt ist, die Aufteilung der Parkblindleistungssollwerte zwischen den Windenergieanlagen zu weiteren Optimierungszwecken zu beeinflussen

Besonders können mit der vorgeschlagenen Lösung, ggf. mit einer weiteren Modifikation, die Szenarien gelöst werden, die vorstehend nach der Beschreibung zur Figur 9 erläutert wurden und die auch für die Konstellation gemäß der Figur 10 anwendbar sind.

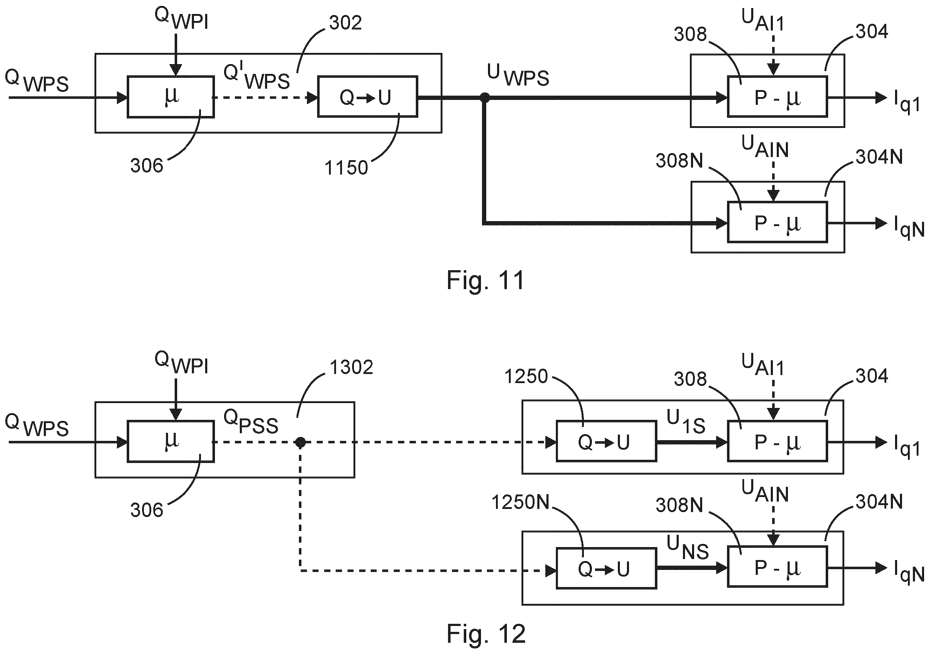

Figur 11 zeigt einen weiteren Aspekt, baut aber auf Figur 5 auf, von der sie sich im Grunde nur durch einen Q-U-Übertragungsblock 1150 unterscheidet, der eine Funktionalität beschreibt, die in der zentralen Parksteuerung 302 gemäß Figur 3 enthalten ist. Daher wird in Figur 11 für die zentrale Parksteuerung ebenfalls das Bezugszeichen 302 verwendet, da diese beiden zentralen Parksteuerungen gleich sein können. In dem Q-U-Übertragungsblock wird der Parkblindleistungssollwert $Q'_{WPS}$ in den Parkspannungssollwert $U_{WPS}$ übertragen, nämlich auf Parkebene.

Der Parkspannungssollwert $U_{WPS}$ kann im Q-U-Übertragungsblock 1150 nach folgender Formel berechnet werden:

$$U_{WPS} = Q'_{WPS}/k + 100\%$$

Dabei ist kein Skalierungsfaktor, der besonders so zu wählen ist, dass $Q'_{WPS}/k$ dem Betrage nach deutlich kleiner als 100% ist, denn $U_{WPS}$ sollte in der Nähe von 100% sein, denn das bedeutet, dass der nicht prozentuale Wert von $U_{WPS}$ um realistische Werte um die Nennspannung schwankt. Entsprechend ist k zu wählen.

Figur 12 zeigt einen ähnlichen Aufbau wie Figur 11, aber mit dem Unterschied, dass eine Übertragung von einem Blindleistungssollwert auf einen Spannungssollwert erst auf Anlagenebene erfolgt, nämlich durch einen Q-U-Übertragungsblock 1250 bzw. 1250N, der jeweils in einer Windenergieanlage 304 bzw. 304N angeordnet ist. Der Q-U-Übertragungsblock 1250 bzw. 1250N erzeugt jeweils einen individuellen Anlagenspannungssollwert $U_{1S}$ bzw. $U_{NS}$.

Figuren 11 und 12 sollen besonders die unterschiedlichen Konzepte zeigen, die nämlich den Figuren 8 und 9 einerseits und der Figur 10 andererseits zu Grunde liegen.

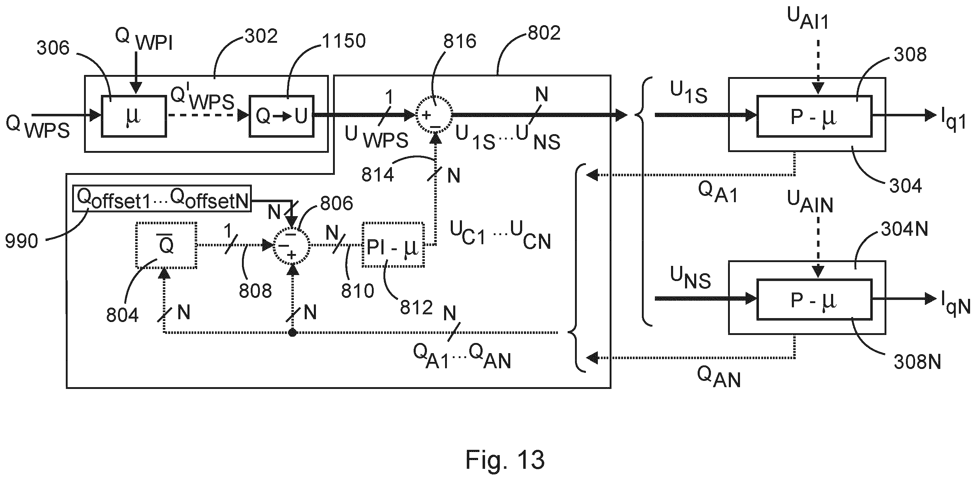

Figur 13 zeigt im Grunde den Aufbau der Figur 9, wobei der Q-U-Übertragungsblock 1150 gemäß Figur 11 in der zentralen Parksteuerung 302 veranschaulicht ist.

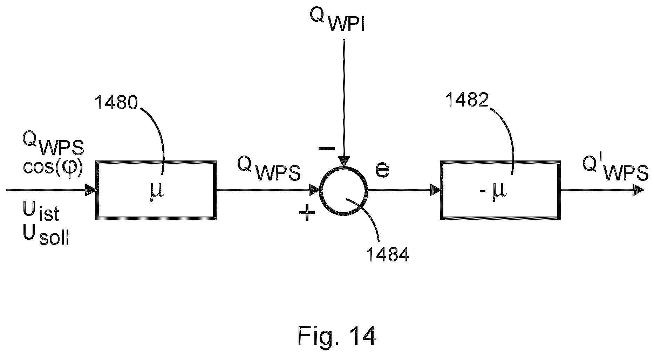

Figur 14 zeigt veranschaulichend Funktionsblöcke, die in einer zentralen Parksteuerung, sowohl 302 als auch 1302, enthalten sein können. Durch einen Parkumrechnungsblock 1480 wird veranschaulicht, dass eine Parkvorgabe auf unterschiedliche Weise erfolgen kann.

Es kann als Parkvorgabe besonders ein Parkblindleistungssollwert $Q_{WPS}$ direkt vorgegeben werden. Dann reicht der Parkumrechnungsblock 1480 diesen Wert im Grunde nur weiter.

Es kann ein $\cos(\varphi)$ vorgegeben werden, dann kann der Parkumrechnungsblock 1480 daraus einen Parkblindleistungssollwert $Q_{WPS}$ berechnen, nämlich in Abhängigkeit von dem aktuell eingespeisten Strom.

Es kann eine Sollspannung $U_{soll}$ vorgegeben werden, dann kann der Parkumrechnungsblock 1480 daraus einen Parkblindleistungssollwert $Q_{WPS}$ berechnen.

Es kann eine Berechnung des Parkblindleistungssollwertes $Q_{WPS}$ aus einer Sollspannung $U_{ist}$ über eine Q-U-Charakteristik erfolgen, die in dem Parkumrechnungsblock 1480 hinterlegt sein kann.

In allen Fällen wird dann der Parkblindleistungssollwert $Q_{WPS}$ weiter verwendet und an der Summierstelle 1484 mit einem Parkblindleistungsistwert $Q_{WPI}$ verglichen, sodass sich eine Regelabweichung bzw. ein Regelfehler e ergibt. Der Regelfehler e wird dann auf einen PI-Regler 1482 gegeben, der einen modifizierten Parkblindleistungssollwert $Q'_{WPS}$ ausgibt. Im ideal ausgeregelten Fall liegt der modifizierte Parkblindleistungssollwert $Q'_{WPS}$ um eine Blindleistungsdifferenz über dem Parkblindleistungssollwert $Q_{WPS}$, die im Windpark verbraucht wird.

Der modifizierte Parkblindleistungssollwert $Q'_{WPS}$ kann dem Parkblindleistungssteuerwert $Q_{PSS}$ entsprechen (s. Fig. 10), besonders, wenn der Parkblindleistungssollwert $Q_{WPS}$ bzw. auch der modifizierte Parkblindleistungssollwert $Q'_{WPS}$ und der Parkblindleistungssteuerwert $Q_{PSS}$ als prozentuale Werte ausgegeben werden. Der modifizierte Parkblindleistungssteuerwert $Q_{PSS}$ kann auch als Ausgangswert zur Bestimmung des Parkspannungssollwertes $U_{WPS}$ verwendet werden (s. Fig. 8 und 9).

Ganz generell werden erfindungsgemäß u.a. folgende Ausführungsformen vorgeschlagen, die, sofern nicht technisch widersprüchlich, mit den übrigen beschriebenen Aspekten kombiniert werden können:

1. Verfahren zum Bereitstellen einer Parkblindleistung durch einen mehrere Windenergieanlagen aufweisenden Windpark, umfassend die Schritte

- Empfangen eines Parkblindleistungssollwertes als Vorgabe einer durch den Windpark einzuspeisenden Blindleistung,

- Bestimmen eines Parkspannungssollwertes als gemeinsamen Spannungssollwert für alle Windenergieanlagen in Abhängigkeit von dem Parkblindleistungssollwert,

- Bestimmen eines individuellen Anlagenspannungssollwertes jeweils für eine der Windenergieanlagen in Abhängigkeit von dem Parkspannungssollwert,

- Bestimmen und Abgeben einer individuellen Anlagenblindleistung oder eines individuellen Blindstroms jeweils durch eine der Windenergieanlagen in Abhängigkeit von einer Anlagenspannungsdifferenz als Differenz zwischen einer Anlagenistspannung und dem individuellen Anlagenspannungssollwert derjeweiligen Windenergieanlage und wobei

- der individuelle Anlagenspannungssollwert jeweils in Abhängigkeit von der individuellen Anlagenblindleistung derjeweiligen Windenergieanlage und in Abhängigkeit von mehreren, insbesondere allen individuellen Anlagenblindleistungen der Windenergieanlagen des Windparks bestimmt wird.

2. Verfahren nach Ausführungsform 1, dadurch gekennzeichnet, dass

- jeweils der individuelle Anlagenspannungssollwert aus dem Parkspannungssollwert und einem individuellen Spannungskorrekturwert, insbesondere durch Abziehen dieses individuellen Spannungskorrekturwertes vom Parkspannungssollwert, bestimmt wird, wobei

- der individuelle Spannungskorrekturwert in Abhängigkeit von einer Mittelwertdifferenz als Differenz zwischen der jeweiligen individuellen Anlagenblindleistung und einem Mittelwert aller individuellen Anlagenblindleistungen bestimmt wird, wobei insbesondere

- die Mittelwertdifferenz zur Bestimmung des individuellen Spannungskorrekturwertes über einen Regler, insbesondere PI-Regler gegeben wird.

3. Verfahren nach Ausführungsform 1 oder 2, dadurch gekennzeichnet, dass

- der individuelle Spannungskorrekturwert in Abhängigkeit von einem für die jeweilige Windenergieanlage individuellen Anlagenoffset bestimmt wird, insbesondere so, dass

- eine bzw. die Mittelwertdifferenz berücksichtigt wird, die als Differenz zwischen der jeweiligen individuellen Anlagenblindleistung und einem Mittelwert aller individuellen Anlagenblindleistungen bestimmt wird, wobei

- der individuelle Spannungskorrekturwert in Abhängigkeit von der Mittelwertdifferenz und dem individuellen Offset bestimmt wird, insbesondere so, dass der individuelle Anlagenoffset jeweils auf die Mittelwertdifferenz aufaddiert wird, um eine modifizierte Mittelwertdifferenz zu bestimmen und insbesondere

- die modifizierte Mittelwertdifferenz zur Bestimmung des individuellen Spannungskorrekturwertes über einen bzw. den Regler, insbesondere PI-Regler gegeben wird.

4. Verfahren nach einer der vorstehenden Ausführungsformen, dadurch gekennzeichnet, dass

- eine Summe aller Anlagenoffsets null ist und/oder

- die Anlagenoffsets so bestimmt werden, dass Anlagenblindleistungen an den Windenergieanlagen mit unterschiedlichen Vorzeichen vermieden werden, dass sie insbesondere so bestimmt werden, dass ein Vergleichsmaß einen Vergleichsgrenzwertwert, der zwischen 0,5 und 0,95 liegt oder 1 ist, nicht unterschreitet oder zumindest nicht weniger als 90% des Vergleichsmaßes beträgt als für den Fall, dass alle Anlagenoffsets null sind, wobei

- das Vergleichsmaß durch ein Verhältnis des Betrags einer Summe aller eingespeisten Anlagenblindleistungen zu einer Summe der Beträge aller Anlagenblindleistungen definiert ist.

5. Verfahren nach einer der vorstehenden Ausführungsformen, dadurch gekennzeichnet, dass

- ein bzw. der individuelle Spannungskorrekturwert, zum Bestimmen des jeweiligen individuellen Anlagenspannungssollwertes aus dem Parkspannungssollwert, jeweils so bestimmt wird, dass eine Summe über alle individuellen Anlagenspannungssollwerte null ist.

6. Verfahren nach einer der vorstehenden Ausführungsformen, dadurch gekennzeichnet, dass

- die individuelle Anlagenblindleistung dadurch bestimmt wird, dass

- einer Spannungsdifferenz als Differenz zwischen dem individuellen Anlagenspannungssollwert und einer an der jeweiligen Windenergieanlage anliegenden Anlagenistspannung durch Einstellen der individuellen Anlagenblindleistung entgegengewirkt wird.

7. Verfahren nach einer der vorstehenden Ausführungsformen, dadurch gekennzeichnet, dass

- die Windenergieanlagen jeweils ihre abgegebene individuelle Anlagenblindleistung als Anlagenblindleistungsistwert erfassen und an eine zentrale Steuereinheit des Windparks übertragen, zur Verwendung in der Bestimmung aller individueller Anlagenspannungssollwerte.

8. Verfahren nach einer der vorstehenden Ausführungsformen, dadurch gekennzeichnet, dass

- die individuelle Anlagenblindleistung jeweils berücksichtigt und/oder übertragen wird als relativer, insbesondere prozentualer Wert bezogen auf eine maximal verfügbare Anlagenblindleistung der jeweiligen Windenergieanlage oder eine Nennblind- oder -wirkleistung der jeweiligen Windenergieanlage.

9. Verfahren nach einer der vorstehenden Ausführungsformen, dadurch gekennzeichnet, dass

- ein bzw. der individuelle Spannungskorrekturwert, zum Bestimmen des jeweiligen individuellen Anlagenspannungssollwertes aus dem Parkspannungssollwert,

- durch Vorgabe einer Korrekturbegrenzung begrenzbar ist, wobei

- zur Begrenzung der individuellen Spannungskorrekturwerte die Korrekturbegrenzung so auf alle individuellen Spannungskorrekturwerte angewendet wird, dass eine Summe aller individuellen Spannungskorrekturwerte gleichbleibt, insbesondere null bleibt, wobei insbesondere

- im Falle einer Vorgabe der Korrekturbegrenzung und wenn wenigstens ein individueller Spannungskorrekturwert, bevor er begrenzt wird, die Korrekturbegrenzung überschreitet,

- ein Begrenzungsverhältnis gebildet wird, als Verhältnis zwischen der Korrekturbegrenzung und einem dem Betrage nach maximalen Spannungskorrekturwert, als größtem Wert aller individuellen Spannungskorrekturwerte vor einer Begrenzung, und

- jeder individuelle Spannungskorrekturwert mit dem Begrenzungsverhältnis multipliziert wird, um dadurch jeweils einen individuellen modifizierten Spannungskorrekturwert zu bilden, der zum Bestimmen des jeweiligen individuellen Anlagenspannungssollwertes aus dem Parkspannungssollwert verwendet wird.

10. Verfahren nach einer der vorstehenden Ausführungsformen, dadurch gekennzeichnet, dass

- im Falle des Auftretens eines Netzfehlers, insbesondere in einem FRT-, LVRT- oder OVRT-Fall,

- an einer, einigen oder allen Windenergieanlagen eine Statik, die einen Zusammenhang zwischen Anlagenspannungsdifferenz und einem von der jeweiligen Windenergieanlage einzuspeisenden Anlagenblindstrom vorgibt, gegenüber einer Situation ohne Netzfehler verändert wird, und/oder

- das Bestimmen der individuellen Anlagenblindleistung bzw. des individuellen Anlagenblindstromes an einer, einigen oder allen Windenergieanlagen in ein vereinfachtes Alternativverfahren geändert wird, bei dem insbesondere

- jeweils die betreffende Windenergieanlage einen individuellen Anlagenblindstrom in Abhängigkeit von der erfassten an der jeweiligen Windenergieanlage anliegende Anlagenistspannung und einem fest vorgegebenen Spannungssollwert und/oder in Abhängigkeit eines von der betreffenden Windenergieanlage vor dem Auftreten des Netzfehlers eingespeisten Blindstroms bestimmt und/oder

- das Alternativverfahren eine veränderte Statik verwendet, die einen Zusammenhang zwischen einer bzw. der Spannungsdifferenz und dem individuellen Anlagenblindstrom angibt, wobei insbesondere

- für die Windenergieanlagen, die zum vereinfachten Alternativverfahren wechseln, das Bestimmen eines individuellen Anlagenspannungssollwertes eingefroren wird, bis der Netzfehler beendet ist und/oder bis die Windenergieanlagen das vereinfachte Alternativverfahren wieder verlassen haben, und insbesondere

- bei Verwendung eines Reglers mit integralem Anteil der integrale Anteil eingefroren wird.

11. Verfahren nach einer der vorstehenden Ausführungsformen, dadurch gekennzeichnet, dass

- im Falle des Auftretens eines Netzfehlers, insbesondere in einem FRT-, LVRT- oder OVRT-Fall,

- wenn das Bestimmen der individuellen Anlagenblindleistung an einer oder einigen, aber nicht allen Windenergieanlagen in ein vereinfachtes Alternativverfahren geändert wird,

- das Bestimmen der individuellen Anlagenspannungssollwerte für die Windenergieanlagen fortgesetzt wird, an denen nicht in das vereinfachte Alternativverfahren geändert wurde, wobei

- zur Bestimmung der individuellen Anlagenspannungssollwerte eine Summe aller eingespeisten Blindleistungen von nur den Windenergieanlagen verwendet wird, an denen nicht in das vereinfachte Alternativverfahren geändert wurde.

12. Verfahren nach einer der vorstehenden Ausführungsformen, dadurch gekennzeichnet, dass

- ein Korrekturreglerzum Bestimmen eines bzw. des individuellen Spannungskorrekturwertes aus einer bzw. der Mittelwertdifferenz als Differenz zwischen der jeweiligen individuellen Anlagenblindleistung und einem Mittelwert aller individuellen Anlagenblindleistungen, jeweils so parametriert wird, dass

- der Korrekturregler ähnlich schnell oder schneller als ein Parkregler zum Bestimmen des Parkspannungssollwertes ist, und/oder

- dass der Korrekturregler eine Regelungszeitkonstante aufweist, die maximal doppelt so groß wie eine Regelungszeitkonstante des Parkreglers ist, insbesondere kleiner ist.

13. Windpark zum Bereitstellen einer Parkblindleistung durch mehrere Windenergieanlagen des Windparks, wobei der Windpark eine Steuerung aufweist, die dazu vorbereitet ist, ein Verfahren zum Bereitstellen der Parkblindleistung mit den folgenden Schritten auszuführen:

- Empfangen eines Parkblindleistungssollwertes als Vorgabe einer durch den Windpark einzuspeisenden Parkblindleistung,

- Bestimmen eines Parkspannungssollwertes als gemeinsamen Spannungssollwert für alle Windenergieanlagen in Abhängigkeit von dem Parkblindleistungssollwert,

- Bestimmen eines individuellen Anlagenspannungssollwertes jeweils für eine der Windenergieanlagen in Abhängigkeit von dem Parkspannungssollwert,

- Bestimmen und Abgeben einer individuellen Anlagenblindleistung jeweils durch eine der Windenergieanlagen in Abhängigkeit von einer Anlagenspannungsdifferenz als Differenz zwischen einer Anlagenistspannung und dem individuellen Anlagenspannungssollwert der jeweiligen Windenergieanlage und wobei

- der individuelle Anlagenspannungssollwert jeweils in Abhängigkeit von der individuellen Anlagenblindleistung derjeweiligen Windenergieanlage und in Abhängigkeit von mehreren, insbesondere allen individuellen Anlagenblindleistungen der Windenergieanlagen des Windparks bestimmt wird.

14. Windpark nach Ausführungsform 13, dadurch gekennzeichnet, dass er-eine zentrale Parksteuereinheit und mehrere Anlagensteuerungen aufweist, wobei

- jeweils eine der Anlagensteuerungen an jeweils einer Windenergieanlage angeordnet ist,

- die Anlagensteuerungen mit der zentralen Parksteuereinheit über ein Kommunikationssystem verbunden sind, insbesondere über ein Daten-Bussystem, und

- ein Verfahren zum Bereitstellen der Parkblindleistung auf der zentralen Parksteuereinheit und den mehrere Anlagensteuerungen implementiert ist.

15. Windpark nach Ausführungsform 13 oder 14, dadurch gekennzeichnet, dass

- er dazu vorbereitet ist, ein Verfahren gemäß einem der Ausführungsformen 1 bis 12 auszuführen und/oder dass

- ein Verfahren gemäß einem der Ausführungsformen 1 bis 12 in einer bzw. der zentralen Parksteuereinheit und mehreren bzw. den mehreren Anlagensteuerungen implementiert ist.

**Patentansprüche**

1. Verfahren zum Bereitstellen einer Parkblindleistung durch einen mehrere Windenergieanlagen aufweisenden Windpark, umfassend die Schritte

   - Empfangen eines eine Parkblindleistung kennzeichnenden oder beeinflussenden Parkvorgabewertes zur Vorgabe einer durch den Windpark einzuspeisenden Blindleistung,
   - Bestimmen eines Parksteuersollwertes als gemeinsamen Vorgabewert für alle Windenergieanlagen in Abhängigkeit von dem Parkvorgabewert,

- Bestimmen eines individuellen Anlagensteuersollwertes jeweils für eine der Windenergieanlagen in Abhängigkeit von dem Parksteuersollwert,

- Bestimmen und Abgeben einer individuellen Anlagenblindleistung oder eines individuellen Blindstroms jeweils durch eine der Windenergieanlagen in Abhängigkeit von einer Anlagenspannungsdifferenz als Differenz zwischen einer Anlagenistspannung und einem individuellen Anlagenspannungssollwert der jeweiligen Windenergieanlage, wobei der individuelle Anlagenspannungssollwert aus dem individuellen Anlagensteuersollwert der jeweiligen Windenergieanlage bestimmt wird, oder dem individuellen Anlagensteuersollwert entspricht, und wobei

- der individuelle Anlagensteuersollwert jeweils in Abhängigkeit von der individuellen Anlagenblindleistung der jeweiligen Windenergieanlage und in Abhängigkeit von mehreren, insbesondere allen individuellen Anlagenblindleistungen der Windenergieanlagen des Windparks bestimmt wird.

2. Verfahren nach Anspruch 1, **dadurch gekennzeichnet, dass**

- der Parkvorgabewert als Parkblindleistungssollwert empfangen wird, und

- der Parksteuersollwert als Parkspannungssollwert zum Vorgeben einer Spannung als gemeinsamen Vorgabewert für alle Windenergieanlagen bestimmt wird, und

- die individuellen Anlagensteuersollwerte als individuelle Anlagenspannungssollwerte bestimmt werden.

3. Verfahren nach Anspruch 1, **dadurch gekennzeichnet, dass**

- der Parkvorgabewert als Parkblindleistungssollwert empfangen wird, oder ein Parkblindleistungssollwert aus dem Parkvorgabewert bestimmt wird, wenn der Parkvorgabewert kein Parkblindleistungssollwert ist,

- aus dem Parkblindleistungssollwert über einen Regler ein modifizierter Parkblindleistungssollwert bestimmt wird, und

- das Bestimmen des Parksteuersollwertes in Abhängigkeit von dem Parkvorgabewert dadurch erfolgt, dass der Parksteuersollwert in Abhängigkeit von dem modifizierten Parkblindleistungssollwert bestimmt wird.

4. Verfahren nach einem der vorstehenden Ansprüche, **dadurch gekennzeichnet, dass**

- der Parksteuersollwert als Parkblindleistungssteuersollwert zum Vorgeben einer Blindleistung als gemeinsamen Vorgabewert für alle Windenergieanlagen bestimmt wird, und

- die individuellen Anlagensteuersollwerte als Anlagenblindleistungssollwerte bestimmt werden, und/oder, dass

- an jeder der Windenergieanlagen, aus dem jeweiligen Anlagensteuersollwert, insbesondere, wenn er als Anlagenblindleistungssollwert bestimmt wird,

- der jeweilige Anlagenspannungssollwert bestimmt wird, insbesondere mittels einer Steuerwertübertragungseinheit.

5. Verfahren nach einem der vorstehenden Ansprüche, **dadurch gekennzeichnet, dass**

- aus jedem Anlagensteuersollwert, insbesondere, wenn er als Anlagenblindleistungssollwert bestimmt wird, jeweils über eine Steuerwertübertragungsfunktion der Anlagenspannungssollwert bestimmt wird, und die Steuerwertübertragungsfunktion wenigstens eine Eigenschaft aufweist aus der Liste aufweisend,

- die Steuerwertübertragungsfunktion weist ein Tiefpassverhalten mit wenigstens einer ersten Haupttiefpasszeitkonstanten auf, wobei insbesondere

- die erste Haupttiefpasszeitkonstante einen Wert im Bereich von 100ms bis 500ms aufweist,

- die Steuerwertübertragungsfunktion führt das Bestimmen des Anlagenspannungssollwertes unabhängig von einer Anlagenistspannung aus,

- die Steuerwertübertragungsfunktion begrenzt einen Gradienten des Anlagenspannungssollwertes auf einen vorgegebenen Gradientengrenzwert und

- die Steuerwertübertragungsfunktion begrenzt eine Amplitude des Anlagenspannungssollwertes auf einen vorgegebenen Amplitudengrenzwert.

6. Verfahren nach einem der vorstehenden Ansprüche, **dadurch gekennzeichnet, dass**

- für jeweils eine der Windenergieanlagen ihr Anlagensteuerwert begrenzt wird, insbesondere, dass

- ein Anstieg ihres Anlagensteuersollwertes verhindert wird, wenn ihre abgegebene individuelle Anlagenblindleistung bzw. ihr abgegebener individueller Blindstrom einen vorbestimmten Maximalwert erreicht hat, der insbesondere einen Wert angibt, den die individuelle Anlagenblindleistung bzw. der individuelle Blindstrom nicht überschreiten kann oder darf, wobei insbesondere

- die jeweils abgegebene individuelle Anlagenblindleistung bzw. der abgegebene individuelle Blindstrom erfasst wird und darauf überprüft wird, ob der vorbestimmte Maximalwert erreicht wird und, wenn der vorbestimmte Maximalwert erreicht wird, der Anstieg des Anlagensteuersollwertes verhindert wird, insbesondere der Anlagensteuerwert und/oder ein den Anlagensteuerwert beeinflussender Offset eingefroren wird, bis der vorbestimmte Maximalwert wieder unterschritten wird.

7. Verfahren nach einem der vorstehenden Ansprüche, **dadurch gekennzeichnet, dass**

- jeweils der individuelle Anlagensteuersollwert aus dem Parksteuersollwert und einem individuellen Steuerkorrekturwert, insbesondere durch Abziehen dieses individuellen Steuerkorrekturwertes vom Parksteuersollwert, bestimmt wird, wobei
- der individuelle Steuerkorrekturwert in Abhängigkeit von einer Mittelwertdifferenz als Differenz zwischen der jeweiligen individuellen Anlagenblindleistung und einem Mittelwert aller individuellen Anlagenblindleistungen bestimmt wird, wobei insbesondere
- die Mittelwertdifferenz zur Bestimmung des individuellen Steuerkorrekturwertes über einen Regler, insbesondere PI-Regler gegeben wird.

8. Verfahren nach einem der vorstehenden Ansprüche, **dadurch gekennzeichnet, dass**

- ein bzw. der individuelle Steuerkorrekturwert in Abhängigkeit von einem für die jeweilige Windenergieanlage individuellen Anlagenoffset bestimmt wird, insbesondere so, dass
- eine bzw. die Mittelwertdifferenz berücksichtigt wird, die als Differenz zwischen der jeweiligen individuellen Anlagenblindleistung und einem Mittelwert aller individuellen Anlagenblindleistungen bestimmt wird, wobei
- der individuelle Steuerkorrekturwert in Abhängigkeit von der Mittelwertdifferenz und dem individuellen Offset bestimmt wird, insbesondere so, dass der individuelle Anlagenoffset jeweils auf die Mittelwertdifferenz aufaddiert wird, um eine modifizierte Mittelwertdifferenz zu bestimmen und insbesondere
- die modifizierte Mittelwertdifferenz zur Bestimmung des individuellen Steuerkorrekturwertes über einen bzw. den Regler, insbesondere PI-Regler gegeben wird.

9. Verfahren nach einem der vorstehenden Ansprüche, **dadurch gekennzeichnet, dass**

- eine Summe aller Anlagenoffsets null ist und/oder
- die Anlagenoffsets so bestimmt werden, dass Anlagenblindleistungen an den Windenergieanlagen mit unterschiedlichen Vorzeichen vermieden werden, dass sie insbesondere so bestimmt werden, dass ein Vergleichsmaß einen Vergleichsgrenzwertwert, der zwischen 0,5 und 0,95 liegt oder 1 ist, nicht unterschreitet oder zumindest nicht weniger als 90% des Vergleichsmaßes beträgt als für den Fall, dass alle Anlagenoffsets null sind, wobei

- das Vergleichsmaß durch ein Verhältnis des Betrags einer Summe aller eingespeisten Anlagenblindleistungen zu einer Summe der Beträge aller Anlagenblindleistungen definiert ist, und/oder, dass

- ein bzw. der individuelle Steuerkorrekturwert, zum Bestimmen des jeweiligen individuellen Anlagensteuersollwertes aus dem Parksteuersollwert, jeweils so bestimmt wird, dass eine Summe über alle individuellen Anlagensteuersollwerte null ist.

10. Verfahren nach einem der vorstehenden Ansprüche, **dadurch gekennzeichnet, dass**

- die individuelle Anlagenblindleistung dadurch bestimmt wird, dass
- einer Spannungsdifferenz als Differenz zwischen dem individuellen Anlagenspannungssollwert und einer an der jeweiligen Windenergieanlage anliegenden Anlagenistspannung durch Einstellen der individuellen Anlagenblindleistung entgegengewirkt wird und/oder, dass
- die Windenergieanlagen jeweils ihre abgegebene individuelle Anlagenblindleistung als Anlagenblindleistungsistwert erfassen und an eine zentrale Steuereinheit des Windparks übertragen, zur Verwendung in der Bestimmung aller individueller Anlagensteuersollwerte und/oder, dass
- die individuelle Anlagenblindleistung jeweils berücksichtigt und/oder übertragen wird als relativer, insbesondere prozentualer Wert bezogen auf eine maximal verfügbare Anlagenblindleistung der jeweiligen Windenergieanlage oder eine Nennblind- oder -wirkleistung der jeweiligen Windenergieanlage.

11. Verfahren nach einem der vorstehenden Ansprüche, **dadurch gekennzeichnet, dass**

- ein bzw. der individuelle Steuerkorrekturwert, zum Bestimmen des jeweiligen individuellen Anlagensteuersollwertes aus dem Parksteuersollwert,

- durch Vorgabe einer Korrekturbegrenzung begrenzbar ist, wobei

- zur Begrenzung der individuellen Steuerkorrekturwerte die Korrekturbegrenzung so auf alle individuellen Steuerungskorrekturwerte angewendet wird, dass eine Summe aller individuellen Steuerungskorrekturwerte gleichbleibt, insbesondere null bleibt, wobei insbesondere

- im Falle einer Vorgabe der Korrekturbegrenzung und wenn wenigstens ein individueller Steuerkorrekturwert, bevor er begrenzt wird, die Korrekturbegrenzung überschreitet,

- ein Begrenzungsverhältnis gebildet wird, als Verhältnis zwischen der Korrekturbegrenzung und einem dem Betrage nach maximalen Steuerkorrekturwert, als größtem Wert aller individuellen Steuerkorrekturwerte vor einer Begrenzung, und

- jeder individuelle Steuerkorrekturwert mit dem Begrenzungsverhältnis multipliziert wird, um dadurch jeweils einen individuellen modifizierten Steuerkorrekturwert zu bilden, der zum Bestimmen des jeweiligen individuellen Anlagensteuersollwertes aus dem Parksteuersollwert verwendet wird.

12. Verfahren nach einem der vorstehenden Ansprüche, **dadurch gekennzeichnet, dass**

    - im Falle des Auftretens eines Netzfehlers, insbesondere in einem FRT-, LVRT- oder OVRT-Fall,

- an einer, einigen oder allen Windenergieanlagen eine Statik, die einen Zusammenhang zwischen Anlagenspannungsdifferenz und einem von der jeweiligen Windenergieanlage einzuspeisenden Anlagenblindstrom vorgibt, gegenüber einer Situation ohne Netzfehler verändert wird, und/oder

- das Bestimmen der individuellen Anlagenblindleistung bzw. des individuellen Anlagenblindstromes an einer, einigen oder allen Windenergieanlagen in ein vereinfachtes Alternativverfahren geändert wird, bei dem insbesondere

- jeweils die betreffende Windenergieanlage einen individuellen Anlagenblindstrom in Abhängigkeit von der erfassten an der jeweiligen Windenergieanlage anliegende Anlagenistspannung und einem fest vorgegebenen Spannungssollwert und/oder in Abhängigkeit eines von der betreffenden Windenergieanlage vor dem Auftreten des Netzfehlers eingespeisten Blindstroms bestimmt und/oder

- das Alternativverfahren eine veränderte Statik verwendet, die einen Zusammenhang zwischen einer bzw. der Spannungsdifferenz und dem individuellen Anlagenblindstrom angibt, wobei insbesondere

- für die Windenergieanlagen, die zum vereinfachten Alternativverfahren wechseln, das Bestimmen eines individuellen Anlagenspannungssollwertes eingefroren wird, bis der Netzfehler beendet ist und/oder bis die Windenergieanlagen das vereinfachte Alternativverfahren wieder verlassen haben, und insbesondere

    - bei Verwendung eines Reglers mit integralem Anteil der integrale Anteil eingefroren wird.

13. Verfahren nach einem der vorstehenden Ansprüche, **dadurch gekennzeichnet, dass**

    - im Falle des Auftretens eines Netzfehlers, insbesondere in einem FRT-, LVRT- oder OVRT-Fall,

- wenn das Bestimmen der individuellen Anlagenblindleistung an einer oder einigen, aber nicht allen Windenergieanlagen in ein vereinfachtes Alternativverfahren geändert wird,

- das Bestimmen der individuellen Anlagensteuersollwerte für die Windenergieanlagen fortgesetzt wird, an denen nicht in das vereinfachte Alternativverfahren geändert wurde, wobei

- zur Bestimmung der individuellen Anlagensteuersollwerte eine Summe aller eingespeisten Blindleistungen von nur den Windenergieanlagen verwendet wird, an denen nicht in das vereinfachte Alternativverfahren geändert wurde und/oder, dass

- ein Korrekturregler zum Bestimmen eines bzw. des individuellen Steuerkorrekturwertes aus einer bzw. der Mittelwertdifferenz als Differenz zwischen der jeweiligen individuellen Anlagenblindleistung und einem Mittelwert aller individuellen Anlagenblindleistungen, jeweils so parametriert wird, dass

    - der Korrekturregler ähnlich schnell oder schneller als ein Parkregler zum Bestimmen des Parksteuersollwertes ist, und/oder

- dass der Korrekturregler eine Regelungszeitkonstante aufweist, die maximal doppelt so groß wie eine Regelungszeitkonstante des Parkreglers ist, insbesondere kleiner ist.

14. Windpark zum Bereitstellen einer Parkblindleistung durch mehrere Windenergieanlagen des Windparks, wobei der Windpark eine Steuerung aufweist, die dazu vorbereitet ist, ein Verfahren zum Bereitstellen der Parkblindleistung mit den folgenden Schritten auszuführen:

- Empfangen eines eine Parkblindleistung kennzeichnenden oder beeinflussenden Parkvorgabewertes zur Vorgabe einer durch den Windpark einzuspeisenden Parkblindleistung,

- Bestimmen eines Parksteuersollwertes als gemeinsamen Vorgabewert für alle Windenergieanlagen in Abhängigkeit von dem Parkvorgabewert,

- Bestimmen eines individuellen Anlagensteuersollwertes jeweils für eine der Windenergieanlagen in Abhängigkeit von dem Parksteuersollwert,

- Bestimmen und Abgeben einer individuellen Anlagenblindleistung jeweils durch eine der Windenergieanlagen in Abhängigkeit von einer Anlagenspannungsdifferenz als Differenz zwischen einer Anlagenistspannung und einem individuellen Anlagenspannungssollwert der jeweiligen Windenergieanlage, wobei der individuelle Anlagenspannungssollwert aus dem individuellen Anlagensteuersollwert der jeweiligen Windenergieanlage bestimmt wird, oder dem individuellen Anlagensteuersollwert entspricht, und wobei

- der individuelle Anlagensteuersollwert jeweils in Abhängigkeit von der individuellen Anlagenblindleistung der jeweiligen Windenergieanlage und in Abhängigkeit von mehreren, insbesondere allen individuellen Anlagenblindleistungen der Windenergieanlagen des Windparks bestimmt wird.

15. Windpark nach Anspruch 14, **dadurch gekennzeichnet, dass** er eine zentrale Parksteuereinheit und mehrere Anlagensteuerungen aufweist, wobei

- jeweils eine der Anlagensteuerungen an jeweils einer Windenergieanlage angeordnet ist,
- die Anlagensteuerungen mit der zentralen Parksteuereinheit über ein Kommunikationssystem verbunden sind, insbesondere über ein Daten-Bussystem, und
- ein Verfahren zum Bereitstellen der Parkblindleistung auf der zentralen Parksteuereinheit und den mehrere Anlagensteuerungen implementiert ist und/oder, dass
- der Windpark dazu vorbereitet ist, ein Verfahren gemäß einem der Ansprüche 1 bis 13 auszuführen und/oder dass
- ein Verfahren gemäß einem der Ansprüche 1 bis 13 in der zentralen Parksteuereinheit und den mehreren Anlagensteuerungen implementiert ist.

Fig. 1

Fig. 2

Fig. 3

Fig. 4

Fig. 5

Fig. 6

Fig. 7

Fig. 8

Fig. 9

Fig. 10

Fig. 11

Fig. 12

EP 4 629 468 A1

Fig. 13

EP 4 629 468 A1

Fig. 14

**Europäisches Patentamt**
**European Patent Office**
**Office européen des brevets**

## EUROPÄISCHER RECHERCHENBERICHT

**Nummer der Anmeldung**

EP 24 22 3621

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 2 659 137 B1 (SENVION GMBH [DE]) 9. März 2016 (2016-03-09) * Abbildung 1 * * Absätze [0013] - [0050] * ----- | 1-15 | INV. H02J3/38 H02J3/50 |
| A | EP 3 068 006 B1 (SENVION GMBH [DE]) 10. April 2019 (2019-04-10) * Abbildung 1 * * Absätze [0009] - [0030] * ----- | 1-15 | |
| A | EP 1 802 866 B1 (REPOWER SYSTEMS AG [DE]) 23. September 2009 (2009-09-23) * Abbildung 1 * * Absätze [0001] - [0033] * ----- | 1-15 | |

**RECHERCHIERTE SACHGEBIETE (IPC)**

H02J

Der vorliegende Recherchenbericht wurde für alle Patentansprüche erstellt

| Recherchenort | Abschlußdatum der Recherche | Prüfer |
|---|---|---|
| München | 2. Juni 2025 | Berger, Josef |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 24 22 3621

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-06-2025

| Im Recherchenbericht angeführtes Patentdokument | Datum der Veröffentlichung | Mitglied(er) der Patentfamilie | Datum der Veröffentlichung |
|---|---|---|---|
| EP 2659137 B1 | 09-03-2016 | DE 102010056456 A1 | 21-06-2012 |
| | | DK 2659137 T3 | 13-06-2016 |
| | | EP 2659137 A2 | 06-11-2013 |
| | | ES 2573134 T3 | 06-06-2016 |
| | | US 2013175870 A1 | 11-07-2013 |
| | | WO 2012089675 A2 | 05-07-2012 |
| EP 3068006 B1 | 10-04-2019 | DE 102015003169 A1 | 15-09-2016 |
| | | DK 3068006 T3 | 22-07-2019 |
| | | EP 3068006 A1 | 14-09-2016 |
| | | ES 2739215 T3 | 29-01-2020 |
| EP 1802866 B1 | 23-09-2009 | AT E443808 T1 | 15-10-2009 |
| | | AU 2005291458 A1 | 13-04-2006 |
| | | CA 2581917 A1 | 13-04-2006 |
| | | CN 101091057 A | 19-12-2007 |
| | | DE 102004048341 A1 | 13-04-2006 |
| | | DK 1802866 T3 | 07-12-2009 |
| | | EP 1802866 A1 | 04-07-2007 |
| | | ES 2332525 T3 | 08-02-2010 |
| | | US 2008073912 A1 | 27-03-2008 |
| | | WO 2006037576 A1 | 13-04-2006 |

EPO FORM P0461

Für nähere Einzelheiten zu diesem Anhang : siehe Amtsblatt des Europäischen Patentamts, Nr.12/82